(19) Europäisches Patentamt / European Patent Office / Office européen des brevets

(11) **EP 3 756 916 B1**

## (12) EUROPÄISCHE PATENTSCHRIFT

(45) Veröffentlichungstag und Bekanntmachung des Hinweises auf die Patenterteilung:
**27.09.2023 Patentblatt 2023/39**

(21) Anmeldenummer: **19182073.7**

(22) Anmeldetag: **24.06.2019**

(51) Internationale Patentklassifikation (IPC):
**B60H 1/32** *(2006.01)*     **F25B 40/00** *(2006.01)*
**F25B 25/00** *(2006.01)*     **F25B 5/04** *(2006.01)*
**F25B 6/04** *(2006.01)*     **F25B 49/02** *(2006.01)*
**B60H 1/00** *(2006.01)*

(52) Gemeinsame Patentklassifikation (CPC):
**B60H 1/32284; F25B 5/04; F25B 6/04; F25B 40/00; F25B 49/02;** B60H 2001/00957; F25B 25/005; F25B 2339/047; F25B 2400/05; F25B 2400/054; F25B 2600/13; F25B 2700/1933; F25B 2700/195; F25B 2700/21151; F25B 2700/21163; (Forts.)

(54) **HEIZ- UND/ODER KLIMAANLAGE MIT INTERNEN WÄRMETAUSCHERN**

HEATING AND/OR AIR CONDITIONING SYSTEM WITH INTERNAL HEAT EXCHANGERS

INSTALLATION DE CHAUFFAGE ET / OU DE CLIMATISATION POURVUE D'ÉCHANGEURS DE CHALEUR INTERNES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**30.12.2020 Patentblatt 2020/53**

(73) Patentinhaber: **Konvekta Aktiengesellschaft**
**34613 Schwalmstadt-Ziegenhain (DE)**

(72) Erfinder: **Sonnekalb, Michael**
**34613 Schwalmstadt (DE)**

(74) Vertreter: **Lindinger, Bernhard**
**Akazienweg 20**
**34117 Kassel (DE)**

(56) Entgegenhaltungen:
**EP-A2- 2 174 810**     **JP-A- 2011 117 685**
**US-A1- 2017 227 260**

(52) Gemeinsame Patentklassifikation (CPC): (Forts.)
Y02T 30/00

**Beschreibung**

Gebiet der Technik:

Die Erfindung betrifft eine Heiz- und/oder Klimaanlage mit einem zumindest einen Verdichter, einen Kondensator/Gaskühler, ein Expansionsorgan und einen Verdampfer umfassenden Kältemittelkreis sowie mit wenigstens einem zumindest eine Pumpe für ein Wärmemedium umfassenden Sekundärkreis.

Ferner betrifft die Erfindung ein Fahrzeug, wie insbesondere ein Omnibus oder Schienenfahrzeug, mit einer derartigen Heiz- und/oder Klimaanlage sowie ein Verfahren zum Steuern einer derartigen Heiz- und/oder Klimaanlage.

In einem Kältemittelkreis zirkuliert bei Betrieb Kältemittel, wie beispielsweise $CO_2$. Es wird vom Verdichter komprimiert und dadurch erhitzt und gelangt über Kältemittelleitung so in den Kondensator/Gaskühler, in dem es Wärme abgibt. Im Kältemittelkreis stromabwärts vom Kondensator/Gaskühler wird das Kältemittel im Expansionsorgan entspannt, wodurch es sich abkühlt und darauf im Verdampfer Wärme aufnimmt, um danach zum Saugeingang des Verdichters zu strömen. Zur Weiterleitung von Kältemittel zwischen Komponenten dienen im Kältemittelkreis Kältemittelleitungen. Ein Kondensator/Gaskühler ist entweder als ein Gaskühler für einen Kältemittelkreis, der im transkritischen beziehungsweise überkritischen Betrieb beispielweise mit $CO_2$ als Kältemittel läuft, oder als ein Kondensator für einen Kältemittelkreis, der im unterkritischen Betrieb beispielsweise mit dem Kältemittel R-1234yf läuft, ausgebildet.

Stand der Technik:

Bekannt sind Heiz- und/oder Klimaanlagen mit einem Kältemittelkreis, bei denen insbesondere zur Verbesserung der Effizienz im Kältemittelkreis zumindest ein interner Wärmetauscher zum internen Wärmetausch zwischen dem heißen Kältemittel im Hochdruckbereich im Kältemittelkreis stromabwärts des Kondensators/Gaskühlers und dem kalten Kältemittel im Niedrigdruckbereich im Kältemittelkreis stromabwärts des Verdampfers angeordnet ist. Zum Beispiel ist in DE102018100814A1 ein Kältemittelkreis mit einem derartigen internen Wärmetauscher gezeigt. Dieser ist jedoch nicht regelbar. Bei Betrieb, wie insbesondere im Wärmepumpenbetrieb, einer Heiz- und Klimaanlage besteht die Gefahr, dass es durch den Wärmetausch im internen Wärmetauscher zu zu großer Überhitzung des Kältemittels im Niedrigdruckbereich des Kältemittelkreises vor dem Verdichter kommen kann. Auch besteht die Gefahr, dass es durch den Wärmetausch im internen Wärmetauscher zu zu großer Unterkühlung des Kältemittels im Hochdruckbereich des Kältemittelkreises vor dem Expansionsorgan kommen kann. Ferner kann es zu zu hohen Temperaturen des Kältemittels im Hochdruckbereich des Kältemittelkreises nach dem Verdichter kommen. In EP1623857A1 ist eine Heiz- und Klimaanlage offenbart, bei der im Kältemittelkreis der interne Wärmetauscher im Klimabetrieb benutzt und im Wärmepumpenbetrieb umgangen wird. Eine Heiz- und Klimaanlage mit entsprechender Schaltung ist beispielsweise in DE102005005430A1, dort mit zweistufiger Entspannung bei Umgehung des internen Wärmetauschers im Wärmepumpenbetrieb, offenbart. Auch bei den in DE102016103085A1 und in DE10247667A1 gezeigten Kältemittelkreisen kann der interne Wärmetauscher durch entsprechende Schaltung im Kältemittelkreis umgangen werden. Bei dem in FR3030700A gezeigten Kältemittelkreis zur Klimatisierung eines Fahrzeugs erfolgt eine zweistufige Entspannung durch ein zusätzliches regelbares Expansionsventil am Eingang der Hochdruckseite des internen Wärmtauschers. Dort ist durch Regeln des zusätzlichen Expansionsventils die Temperaturdifferenz des Kältemittels zwischen Hochdruckseite und Niedrigdruckseite des internen Wärmetauschers stufenlos einstellbar. In KR20150023090A ist eine Heiz- und Klimaanlage für ein Fahrzeug offenbart, bei der zwei interne Wärmetauscher zur Verbesserung der Effizienz im Kältemittelkreis so angeordnet sind, dass jeweils bei ihnen heißes Kältemittel durch ihre Hochdruckseite Wärme mit kaltem Kältemittel ihrer Niedrigdruckseite austauscht. Dort sind die beiden internen Wärmetauscher durch entsprechende Schaltung eines verschließbaren zusätzlichen Expansionsorgans zwischen den in einem zusätzlichen Kältemittelleitungsstrang auf ihrer einen Seite in Reihe geschalteten internen Wärmetauschern vom Kältemittel umgehbar. Bei der in WO2018042091A1 gezeigten Heiz- und Klimaanlage sind zwei interne Wärmetauscher im Kältemittelkreis integriert, wobei einer davon ebenfalls umgehbar ist. Ferner ist dort der eine Kondensator/Gaskühler im Kältemittelkreis stromabwärts gleich nach dem Verdichter als Fluid-Fluid-Wärmetauscher zum Wärmetausch des Kältemittels mit einem Wärmemedium eines eine Pumpe enthaltenden Sekundärkreises ausgebildet. Sämtliche der bekannten Kältemittelkreise mit zwei internen Wärmetauschern haben den Nachteil, dass Kältemittelleitungen des Hochdruckbereichs und des Niedrigdruckbereichs jeweils durch mindestens einen gemeinsamen internen Wärmetauscher für den internen Wärmetausch geführt werden. Dadurch ist die Anordnung der Kältemittelleitungen eingeschränkt. Zusätzliches Material und Kosten sind oft damit verbunden. Außerdem benötigt bisher eine Regelung eines internen Wärmetauschers bei Heiz- und Klimaanlagen nachteilig zumindest ein zusätzliches Ventil im Kältemittelkreis und erfolgt durch einen direkten Eingriff in den Kältemittelkreis. In US2017/227260A1, in JP2011117685A und in EP2174810A2 offenbarte Anlagen verfügen ebenfalls über interne Wärmetauscher.

Der im Anspruch 1 angegebenen Erfindung liegt also die Aufgabe zugrunde, eine hinsichtlich internen Wärmetausches verbesserte Heiz- und/oder Klimaanlage mit Kältemittelkreis bereitzustellen.

Eine entsprechende Aufgabe liegt der in Anspruch 12 angegebenen Erfindung bezüglich der Bereitstellung eines Fahrzeugs mit einer Heiz- und/oder Klimaanlage zugrunde. Ferner liegt eine entsprechende weitere Aufgabe der in Anspruch 13
angegebenen Erfindung hinsichtlich der Bereitstellung eines Verfahrens zum Steuern einer Heiz- und/oder Klimaanlage zugrunde.

Zusammenfassung der Erfindung:

Die der im Anspruch 1 angegebenen Erfindung zugrundeliegende Aufgabe wird durch die im Anspruch 1 aufgeführten Merkmale gelöst. Die Aufgabe wird dadurch, dass bei der Heiz- und/oder Klimaanlage mit einem zumindest einen Verdichter, einen Kondensator/Gaskühler, ein Expansionsorgan und einen Verdampfer umfassenden Kältemittelkreis sowie mit wenigstens einem zumindest eine Pumpe für ein Wärmemedium, das Wasser oder Wasser-Glykol-Gemisch ist, umfassenden Sekundärkreis ohne Expansionsorgan im Hochdruckbereich des Kältemittelkreises zwischen dem Kondensator/Gaskühler und dem Expansionsorgan ein erster interner Wärmetauscher integriert ist, der für einen Wärmetausch zwischen Kältemittel des Kältemittelkreises und einem zum Wärmetransport vorgesehenen Wärmemedium des Sekundärkreises vorgesehen ist, und im Niedrigdruckbereich des Kältemittelkreises zwischen dem Verdampfer und Verdichter ein zweiter interner Wärmetauscher integriert ist, der für einen Wärmetausch zwischen dem Kältemittel des Kältemittelkreises und dem Wärmemedium des Sekundärkreises oder einem gegebenenfalls weiteren Wärmemedium eines gegebenenfalls weiteren Sekundärkreises vorgesehen ist, und der erste interne Wärmetauscher und der zweite interne Wärmetauscher derart angeordnet sind, dass sie mithilfe zumindest des Wärmemediums des Sekundärkreises thermisch gekoppelt oder thermisch koppelbar sind und die Pumpe des Sekundärkreises in ihrer Pumpleistung regelbar ist, gelöst.

Im Hochdruckbereich des Kältemittelkreises steht bei Betrieb das stromabwärts des Verdichters komprimierte Kältemittel unter höherem Druck als im Niedrigdruckbereich mit entspanntem Kältemittel stromaufwärts des Verdichters. Das Wärmemedium im Sekundärkreis ist Wasser oder Wasser-Glykol-Gemisch.

Die erfindungsgemäße Heiz- und/oder Klimaanlage hat den Vorteil, dass der interne Wärmetausch zwischen dem heißen Kältemittel im Hochdruckbereich im Kältemittelkreis stromabwärts des Kondensators/Gaskühlers und dem kalten Kältemittel im Niedrigdruckbereich im Kältemittelkreis stromabwärts des Verdampfers nicht direkt sondern indirekt mithilfe zumindest des Wärmemediums des wenigstens zwischengeschalteten Sekundärkreises erfolgen kann. Dadurch ist die Anordnung der Kältemittelleitungen hinsichtlich des internen Wärmtauschs nicht eingeschränkt und für das Regeln des internen Wärmetauschs ist kein zusätzliches Ventil im Kältemittelkreis notwendig, sondern ein Regeln des internen Wärmetauschs ist ohne direkten Eingriff in den Kältemittelkreis im Sekundärkreis und/oder, sofern die Heiz- und/oder Klimaanlage den weiteren Sekundärkreis aufweist, in diesem realisierbar. Durch diese Regelbarkeit des internen Wärmetauschs wird die Gefahr von zu großer Überhitzung des Kältemittels im Niedrigdruckbereich des Kältemittelkreises vor dem Verdichter sowie die Gefahr von zu großer Unterkühlung des Kältemittels im Hochdruckbereich vor dem Expansionsorgan verringert. Mittels der in ihrer Pumpleistung regelbaren Pumpe im Sekundärkreis kann der Volumenstrom von Wärmemedium durch den ersten internen Wärmetauscher im Sekundärkreis reguliert werden. Somit sind die Größe des Wärmetransports der über das Wärmemedium im ersten internen Wärmetauscher vom Kältemittel aufgenommenen Wärme und damit der interne Wärmetausch im Kältemittelkreis einfach regelbar. Bei einer stufenlos in ihrer Leistung regelbaren Pumpe im Sekundärkreis ist der interne Wärmtausch im Kältemittelkreis sogar stufenlos regelbar.

In den Unteransprüchen sind vorteilhafte Ausgestaltungen, Weiterbildungen und Verbesserungen des jeweiligen Gegenstandes der Erfindung angegeben.

Vorzugsweise weist/weisen der Sekundärkreis zum ersten internen Wärmetauscher einen mit Ventil regelbaren Bypass und/oder zum zweiten internen Wärmetauscher der Sekundärkreis oder, sofern die Heiz- und/oder Klimaanlage den weiteren Sekundärkreis umfasst, dieser weitere Sekundärkreis einen mit Ventil regelbaren Bypass auf. Damit lässt sich über das/die Ventil/e im Sekundärkreis der interne Wärmetausch im Kältemittelkreis einfach regeln. Sofern das Wärmemedium im Sekundärkreis durch den Bypass zum ersten internen Wärmetauscher und/oder durch den Bypass zum zweiten internen Wärmetauscher strömt, ist der sonstige Wärmetransport darüber zwischen ersten und zweiten internen Wärmetauscher unterbrochen, sodass ein interner Wärmetausch im Kältemittelkreis dann nicht stattfindet.

Nach einer vorteilhaften Weiterbildung der erfindungsgemäßen Heiz- und/oder Klimaanlage, sofern sie den weiteren Sekundärkreis umfasst, umfasst dieser weitere Sekundärkreis eine Pumpe und einen zum Wärmetausch zwischen seinem weiteren Wärmemedium und dem Wärmemedium des Sekundärkreises vorgesehenen dritten internen Wärmetauscher. Damit ist auf einfache Weise ein interner Wärmetausch im Kältemittelkreis indirekt über das Wärmemedium des zwischengeschalteten Sekundärkreises und weiter über das weitere Wärmemedium des zwischengeschalteten weiteren Sekundärkreises ermöglicht. Besonders vorteilhaft ist dabei eine Ausführung, bei der der Sekundärkreis und/oder der weitere Sekundärkreis einen mit Ventil regelbaren Bypass zum dritten internen Wärmetauscher aufweist/aufweisen. Damit ist eine thermische Kopplung des Sekundärkreises mit dem weiteren Sekundärkreis einfach ein- und abschaltbar, was die Flexibilität hinsichtlich des internen Wärmetauschs erhöht.

Bevorzugt umfasst die erfindungsgemäße Heiz- und/oder Klimaanlage eine Steuerung ausgebildet zum automatischen Steuern der Aktivierung sowie Deaktivierung der Pumpe des Sekundärkreises und/oder deren Pumpleistung und/oder des/der zum Regeln der Strömung durch den Bypass oder die Bypässe vorgesehenen Ventil(s)/e. Dadurch ist ein indirektes automatisches Steuern des internen Wärmetauschs im Kältemittelkreis ohne in den Kältemittelkreis direkt einzugreifen ermöglicht.

Nach einer vorteilhaften Weiterbildung der erfindungsgemäßen Heiz- und/oder Klimaanlage ist/sind ein Temperatursensor im Niedrigdruckbereich des Kältemittelkreises vor dem Verdichter und/oder ein Temperatursensor im Hochdruckbereich des Kältemittelkreises nach dem Verdichter und/oder vor dem Expansionsorgan angeordnet und ist die Steuerung derart ausgebildet, dass in Abhängigkeit vom/von mit dem/den Temperatursensor/en gemessenen Temperaturwert/en die Aktivierung sowie Deaktivierung der Pumpe des Sekundärkreises und/oder deren Pumpleistung und/oder das/die zum Regeln der Strömung durch den Bypass oder die Bypässe vorgesehene/n Ventil/e automatisch steuerbar ist/sind. Dadurch ist die das Regeln des internen Wärmetauschs insbesondere gegen zu große Überhitzung des Kältemittels vor dem Verdichter und zu große Unterkühlung des Kältemittels vor dem Expansionsorgan verbessert.

Gemäß einer vorteilhaften Weiterbildung der erfindungsgemäßen Heiz- und/oder Klimaanlage ist/sind ein Drucksensor im Niedrigdruckbereich des Kältemittelkreises zwischen Expansionsorgan und Verdichter und/oder ein Drucksensor im Hochdruckbereich des Kältemittelkreises zwischen Verdichter und Expansionsorgan angeordnet und ist die Steuerung derart ausgebildet, dass in Abhängigkeit vom/von mit dem/den Drucksensor/en gemessenen Druckwert/en die Aktivierung sowie Deaktivierung der Pumpe des Sekundärkreises und/oder deren Pumpleistung und/oder das/die zum Regeln der Strömung durch den Bypass oder die Bypässe vorgesehene/n Ventil/e automatisch steuerbar ist/sind. Somit lassen sich Gefahren für den Kältemittelkreis durch entsprechendes Regeln des internen Wärmetauschs entgegenwirken. Besonders von Vorteil ist eine derartige Heiz- und/Klimaanlage, die auch noch Temperatursensor/en im Kältemittelkreis aufweist und mit der Steuerung der interne Wärmetausch abhängig von den gemessenen Druckwert/en und Temperaturwert/en des Kältemittels automatisch steuerbar ist.

Nach einer vorteilhaften Ausführung der erfindungsgemäßen Heiz- und Klimaanlage ist der Sekundärkreis als Heizkreis und/oder Kühlkreis mit zumindest einem weiteren Wärmetauscher für einen Wärmetausch mit einem zu kühlenden und/oder zu heizenden Medium oder Objekt ausgebildet. Somit ist der Sekundärkreis neben dem internen Wärmetausch für eine weitere Funktion einsetzbar. Besonders von Vorteil ist dabei eine Ausführung, bei der der Sekundärkreis jeweils zu dem/den zumindest eine weitere Wärmetauscher einen mit Ventil regelbaren Bypass umfasst. Damit ist auf einfache Weise der weitere Wärmetauscher im Sekundärkreis zuschalt- und abschaltbar. Als Kühlkreis ausgebildet ist von Vorteil, wenn der Sekundärkreis auch noch zur Verstärkung der Kühlleistung einen weiteren Fluid-Fluid-Wärmetauscher, der auch Verdampfer im Niedrigdruckbereich des Kältemittelkreises ist, aufweist. Als Heizkreis ausgebildet ist von Vorteil, wenn der Sekundärkreis auch noch zur Verstärkung der Heizleistung einen weiteren Fluid-Fluid-Wärmetauscher, der auch Kondensator/Gaskühler im Hochdruckbereich des Kältemittelkreises ist, aufweist.

Nach einer weiteren vorteilhaften Ausführung der erfindungsgemäßen Heiz- und Klimaanlage ist, sofern sie den weiteren Sekundärkreis umfasst, dieser als Kühlkreis mit zumindest einem weiteren Wärmetauscher für einen Wärmetausch mit einem zu kühlenden Medium oder Objekt ausgebildet. Somit ist der weitere Sekundärkreis neben dem internen Wärmetausch für eine weitere Funktion einsetzbar. Besonders von Vorteil ist dabei eine Ausführung, die jeweils zu dem/den zumindest eine weitere Wärmetauscher einen mit Ventil regelbaren Bypass im weiteren Sekundärkreis umfasst. Dadurch ist auf einfache Weise der weitere Wärmetauscher im weiteren Sekundärkreis zuschalt- und abschaltbar. Als Kühlkreis ausgebildet ist von Vorteil, wenn der weitere Sekundärkreis auch noch zur Verstärkung der Kühlleistung einen weiteren Fluid-Fluid-Wärmetauscher, der auch Verdampfer im Niedrigdruckbereich des Kältemittelkreises ist, aufweist.

Vorzugsweise ist die erfindungsgemäße Heiz- und/oder Klimaanlage für das Heizen und/oder Kühlen von Luft eines Innenraums eines Fahrzeugs, wie insbesondere eines Fahrgastraums eines Omnibusses oder Schienenfahrzeugs, ausgebildet.

Die der Bereitstellung eines Fahrzeugs mit einer Heiz- und/oder Klimaanlage zugrundeliegende Aufgabe wird durch ein Fahrzeug, wie insbesondere ein Omnibus oder Schienenfahrzeug, mit einer erfindungsgemäßen Heiz- und/oder Klimaanlage gelöst. Die Vorteile sowie vorteilhafte Ausgestaltungen und Weiterbildungen gelten entsprechend den oben aufgeführten Vorzügen sowie vorteilhafter Ausgestaltungen und Weiterbildungen zur erfindungsgemäßen Heiz- und/oder Klimaanlage.

Die Aufgabe bezüglich der Bereitstellung eines Verfahrens wird durch ein Verfahren zum Steuern einer erfindungsgemäßen Heiz- und/oder Klimaanlage mit den Schritten, des in Schritt a) Ermittelns wenigstens eines Druckwertes im Kältemittelkreis und/oder wenigstens eines Temperaturwertes im Kältemittelkreis und/oder des Betriebszustandes des Kältemittelkreises, und des in Schritt b) abhängig vom wenigstens einen ermittelten Druckwert und/oder vom wenigstens einen ermittelten Temperaturwert und/oder vom ermittelten Betriebszustand Regelns der Aktivierung sowie Deaktivierung der Pumpe des Sekundärkreises und/oder deren Pumpleistung und/oder des/der Ventil(s)/e des/der Bypasses/Bypässe im Sekundärkreis und/oder, sofern die Heiz- und/oder Klimaanlage den weiteren Sekundärkreis umfasst, im weiteren Sekundärkreis, gelöst. Die Vorteile gelten entsprechend den oben aufgeführten Vorzügen sowie vorteilhafter Ausgestaltungen und Weiterbildungen zur erfindungsgemäßen Heiz- und/oder Klimaanlage. Mit dem Verfahren lässt sich vorteilhaft der interne Wärmetausch regeln und damit auf den Kältemittelkreis einwirken ohne direkt in diesen einzugreifen.

Besonders vorteilhaft ist ein derartiges Verfahren, bei dem in einem Zwischenschritt aa) anhand des/der in Schritt a) ermittelten Druckwert/e und/oder Temperaturwert/e festgestellt wird, ob eine zu große Überhitzung des Kältemittels vor dem Verdichter und/oder eine zu große Unterkühlung des Kältemittels vor dem Expansionsorgan und/oder eine zu hohe Temperatur des Kältemittels nach dem Verdichter vorliegt/vorliegen, und dass entweder, falls zumindest eine Feststellung im Zwischenschritt aa) zu bejahen ist, im Schritt b) die Pumpe des Sekundärkreises deaktiviert wird beziehungsweise bleibt oder deren Pumpleistung reduziert wird und/oder zumindest ein Ventil eines Bypasses nach Anspruch 2 im Sekundärkreis oder, sofern die Heiz- und/oder Klimaanlage den weiteren Sekundärkreis umfasst, zumindest ein Ventil eines Bypasses nach Anspruch 2 oder 4 im weiteren Sekundärkreis bezüglich des Bypasses geöffnet wird beziehungsweise bleibt oder weiter geöffnet wird, oder dass, falls keine Feststellung im Zwischenschritt aa) zu bejahen ist, im Schritt b) die Pumpe des Sekundärkreises aktiviert wird beziehungsweise bleibt oder auch deren Pumpleistung erhöht wird und falls vorhanden jedes Ventil eines Bypasses nach Anspruch 2 im Sekundärkreis und, sofern die Heiz- und/oder Klimaanlage den weiteren Sekundärkreis umfasst, falls vorhanden jedes Ventil eines Bypasses nach Anspruch 2 und 4 bezüglich des Bypasses geschlossen wird beziehungsweise bleibt.

Dadurch ist vorteilhaft ein Schutz vor Gefahren für die Heiz- und/oder Klimaanlage wegen zu großer Überhitzung vor dem Verdichter oder zu großer Unterkühlung vor dem Expansionsorgan oder zu hoher Temperatur des Kältemittels nach dem Verdichter eingerichtet. Eine zu große Überhitzung kann zum Beispiel ab einem vorgegebenen Schwellenwert von 15 °K Überhitzung angenommen werden. Eine zu große Unterkühlung kann beispielsweise ab einem vorgegebenen Schwellenwert von 20 °K Unterkühlung angenommen werden. Eine zu hohe Temperatur des Kältemittels nach dem Verdichter kann zum Beispiel ab einem vorgegebenen Schwellenwert von 150 °C bei $CO_2$ als Kältemittel angenommen werden. Die Größe beziehungsweise der Wert der Überhitzung ist die Differenz zwischen dem tatsächlich bei gemessenem Druck gemessenen Temperaturwert und der sich aus der Dampfdruckkurve im Druck-Temperatur-Diagramm bei dem gemessenen Druck ergebenden niedrigeren Siedetemperatur. Die Dampfdruckkurve lässt sich aus der Funktion

$$p(T) = p_{krit} \cdot ((T/T_{krit} + a) \cdot b)^c + d$$

ermitteln. Wenn man für das Kältemittel $CO_2$ entsprechende Werte einsetzt, ergibt sich:

$$p(T) = 73{,}834 \cdot (((T + 273{,}15)/304{,}21 - 0{,}350042) \cdot 1{,}54159)^{4{,}31458} - 0{,}810014$$

Dabei ist T in °C einzusetzen, und p ergibt sich in $bar_{absolut}$.

Die Größe beziehungsweise der Wert der Unterkühlung ist die Differenz der sich aus der Dampfdruckkurve im Druck-Temperatur-Diagramm bei dem gemessenen Druck ergebenden Siedetemperatur und dem tatsächlich bei dem gemessenen Druck gemessenen niedrigeren Temperaturwert. Dabei wird für den Bereich über die kritische Temperatur hinaus die Dampfdruckkurve extrapoliert, wobei die Siedetemperatur dort nur fiktiv zur Ermittlung der Unterkühlung angenommen wird.

In einer vorteilhaften Weiterbildung des erfindungsgemäßen Verfahrens werden zumindest im Schritt a) ein Druckwert im Kältemittelkreis mit einem Drucksensor im Hochdruckbereich zwischen Verdichter und Expansionsorgan und ein Temperaturwert mit einem Temperatursensor im Hochdruckbereich vor dem Expansionsorgan ermittelt, und es wird anhand des/der in Schritt a) ermittelten Druckwert(s)/e und Temperaturwert(s)/e ein Istwert bezüglich einer Unterkühlung des Kältemittels im Hochdruckbereich des Kältemittelkreises vor dem Expansionsorgan festgestellt, und es wird bei niedrigerem Istwert bezüglich einer Unterkühlung des Kältemittels als ein Sollwert der Unterkühlung, je höher diese Differenz ist, im Schritt b) die Pumpleistung der Pumpe des Sekundärkreises desto mehr erhöht und falls vorhanden jedes Ventil eines Bypasses nach Anspruch 2 im Sekundärkreis und, sofern die Heiz- und/oder Klimaanlage den weiteren Sekundärkreis umfasst, falls vorhanden jedes Ventil eines Bypasses nach Anspruch 2 und 4 bezüglich des Bypasses desto weiter verengt beziehungsweise bleibt geschlossen, oder es wird bei höherem Istwert der Unterkühlung des Kältemittels als ein Sollwert der Unterkühlung, je höher diese Differenz ist, im Schritt b) die Pumpleistung der Pumpe des Sekundärkreises desto mehr verringert und falls vorhanden zumindest ein Ventil eines Bypasses nach Anspruch 2 im Sekundärkreis und/oder, sofern die Heiz- und/oder Klimaanlage den weiteren Sekundärkreis umfasst, falls vorhanden zumindest ein Ventil eines Bypasses nach Anspruch 2 oder 4 bezüglich des Bypasses desto weiter geöffnet beziehungsweise bleibt vollständig geöffnet. Damit wird, ohne direkt in den Kältemittelkreis einzugreifen, auf den Kältemittelkreis in der Weise eingewirkt, dass möglichst die Unterkühlung in den Bereich des Sollwerts von beispielsweise 15 °K gebracht beziehungsweise dort gehalten wird. Damit wird beziehungsweise bleibt die Heiz- und/oder Klimaanlage effizient.

In einer weiteren vorteilhaften Weiterbildung des erfindungsgemäßen Verfahrens werden zumindest im Schritt a) ein Druckwert im Kältemittelkreis mit einem Drucksensor im Niedrigdruckbereich zwischen Expansionsorgan und Verdichter und ein Temperaturwert mit einem Temperatursensor im Niedrigdruckbereich vor dem Verdichter ermittelt, und es wird anhand des/der in Schritt a) ermittelten Druckwert(s)/e und Temperaturwert(s)/e ein Istwert bezüglich einer Überhitzung des Kältemittels im Niedrigdruckbereich des Kältemittelkreises vor dem Verdichter festgestellt, und es wird bei niedrigerem Istwert bezüglich einer Überhitzung des Kältemittels als ein Sollwert der Überhitzung, je höher diese Differenz ist, im Schritt b) die Pumpleistung der Pumpe des Sekundärkreises desto mehr erhöht und falls vorhanden jedes Ventil eines Bypasses nach Anspruch 2

im Sekundärkreis und, sofern die Heiz- und/oder Klimaanlage den weiteren Sekundärkreis umfasst, falls vorhanden jedes Ventil eines Bypasses nach Anspruch 2 und 4

bezüglich des Bypasses desto weiter verengt beziehungsweise bleibt geschlossen, oder es wird bei höherem Istwert der Überhitzung des Kältemittels als ein Sollwert der Überhitzung, je höher diese Differenz ist, im Schritt b) die Pumpleistung der Pumpe des Sekundärkreises desto mehr verringert und falls vorhanden zumindest ein Ventil eines Bypasses nach Anspruch 2 im Sekundärkreis und/oder, sofern die Heiz- und/oder Klimaanlage den weiteren Sekundärkreis umfasst, falls vorhanden zumindest ein Ventil eines Bypasses nach Anspruch 2 oder 4 bezüglich des Bypasses desto weiter geöffnet beziehungsweise bleibt vollständig geöffnet. Damit wird, ohne direkt in den Kältemittelkreis einzugreifen, auf den Kältemittelkreis in der Weise eingewirkt, dass möglichst die Überhitzung in den Bereich des Sollwerts von beispielsweise 10 °K gebracht beziehungsweise dort gehalten wird. Damit wird beziehungsweise bleibt die Heiz- und/oder Klimaanlage effizient.

Schließlich können die Merkmale der Unteransprüche für das erfindungsgemäße Verfahren im Wesentlichen frei miteinander und nicht durch die den Ansprüchen vorliegende Reihenfolge festgelegt kombiniert werden.

Kurze Beschreibung der Zeichnungen:

Anhand der Zeichnungen werden Ausführungsbeispiele der Erfindung erläutert.
Es zeigen

Fig. 1 in schematischer Darstellung ein Ausführungsbeispiel einer Heiz- und/oder Klimaanlage,

Fig. 2 in schematischer Darstellung ein weiteres Ausführungsbeispiel einer Heiz- und/oder Klimaanlage,

Fig. 3 in schematischer Darstellung ein Ausführungsbeispiel einer Heiz- und/oder Klimaanlage mit einem auch als Heizkreis ausgebildeten Sekundärkreis,

Fig. 4 in schematischer Darstellung ein Ausführungsbeispiel einer Heiz- und/oder Klimaanlage mit einem auch als Kühlkreis ausgebildeten Sekundärkreis,

Fig. 5 in schematischer Darstellung ein Ausführungsbeispiel einer Heiz- und/oder Klimaanlage mit einem auch als Kühlkreis ausgebildeten weiteren Sekundärkreis,

Fig. 6 ein Ausführungsbeispiel eines Fahrzeugs mit einer erfindungsgemäßen Heiz- und/oder Klimaanlage,

Fig. 7 in Flussdiagrammdarstellung ein Ausführungsbeispiel eines erfindungsgemäßen Verfahrens,

Fig. 8 in Flussdiagrammdarstellung ein weiteres Ausführungsbeispiel eines erfindungsgemäßen Verfahrens, und

Fig. 9 in Flussdiagrammdarstellung ein weiteres Ausführungsbeispiel eines erfindungsgemäßen Verfahrens.

Ausführliche Beschreibung der Erfindung:

Alle Zeichnungen sind schematisch zu verstehen. Auf maßstabsgetreue Abbildungen wurde zum Zwecke erhöhter Klarheit der Darstellung verzichtet.

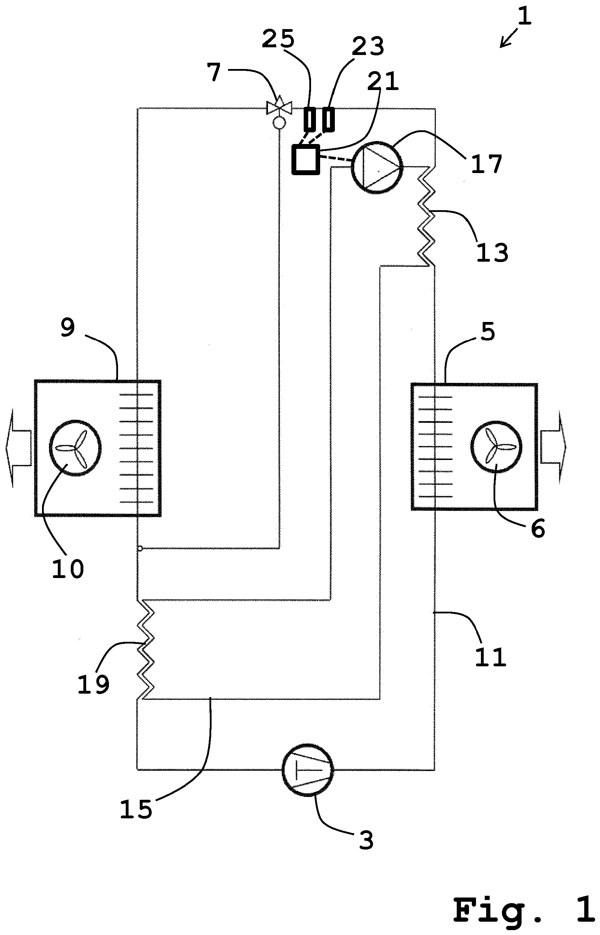

In Fig. 1 ist ein Ausführungsbeispiel einer
Heiz- und/oder Klimaanlage 1 mit einem einen Verdichter 3, einen Kondensator/Gaskühler 5, ein als thermostatisches Expansionsventil ausgebildetes Expansionsorgan 7 und einen Verdampfer 9 umfassenden Kältemittelkreis 11 schematisch gezeigt. Dem Kondensator/Gaskühler 5 ist die Luftfördereinrichtung 6 und dem Verdampfer 9 die Luftfördereinrichtung 10 zugeordnet. In diesem Fall wird der Kältemittelkreis 11 transkritisch beziehungsweise überkritisch beispielsweise mit $CO_2$ als Kältemittel betrieben, sodass der Kondensator/Gaskühler 5 als Gaskühler ausgebildet ist. Denkbar ist auch ein Kältemittelkreis 11, der unterkritisch mit zum Beispiel dem Kältemittel R-1234yf betrieben wird, wobei der Kondensator/Gaskühler 5 als Kondensator ausgebildet ist. Im Hochdruckbereich des Kältemittelkreises 11 ist zwischen dem Kondensator/Gaskühler 5 und dem Expansionsorgan 7 der erste interne Wärmetauscher 13 integriert. Er ist als Fluid-Fluid-Wärmetauscher ausgebildet, der für einen Wärmetausch zwischen Kältemittel des Kältemittelkreises 11 und Wärmemedium des Sekundärkreises 15 vorgesehen ist. Das Wärmemedium des Sekundärkreises ist Wasser oder ein Wasser-Glykol-Gemisch. Antreibbar von einer in der Pumpleistung regelbaren Pumpe 17 kann das Wärmemedium im Sekundärkreis 15 geregelt zirkulieren. Es nimmt stromabwärts der Pumpe 17 vom Kältemittel im ersten internen Wärmetauscher 13 Wärme auf und transportiert diese zum zweiten internen Wärmetauscher 19, der als Fluid-Fluid-Wärmetauscher ausgebildet ist. Dieser einerseits im Sekundärkreis 15 integrierte zweite interne Wärmetauscher 19 ist andererseits im Niedrigdruckbereich des Kältemittelkreises 11 zwischen dem Verdampfer 9 und dem Verdichter 3 integriert und für einen Wärmetausch zwischen Kältemittel des Kältemittelkreises 11 und Wärmemedium des Sekundärkreises 15 vorgesehen. Zumindest ein Teil der vom Wärmemedium zum zweiten Wärmetauscher 19 im Sekundärkreis 15 transportierten Wärme wird dort an das Kältemittel des Kältemittelkreises 11 wieder abgegeben. Somit sind der erste interne Wärmetauscher 13 und der zweite interne Wärmetauscher 19 derart zueinander angeordnet, dass sie mithilfe des Wärmemediums des Sekundärkreises 15 thermisch gekoppelt beziehungsweise thermisch koppelbar sind. So thermisch gekoppelt und geregelt durch die in der Pumpleistung regelbaren Pumpe 17 erfüllen sie zusammen, jedoch ohne dabei direkt in den Kältemittelkreis 11 einzugreifen, die entsprechende Funktion wie ein über ein vorgeschaltetes Expansionsorgan geregelter interner Kältemittel-Kältemittel-Wärmetauscher im herkömmlichen Sinne. Die Pumpleistung der Pumpe 17 wird von der Steuerung 21 über in Fig. 1 gestrichelt dargestellte Steuerungsverbindung automatisch gesteuert. Die Steuerung 21 empfängt vom Temperatursensor 23 im Hochdruckbereich des Kältemittelkreises 11 vor dem Expansionsorgan 7 den Temperaturwert des Kältemittels. Außerdem empfängt die Steuerung 21 vom Drucksensor 25 im Hochdruckbereich des Kältemittelkreises 11 vor dem Expansionsorgan 7 den Druckwert des Kältemittels. Aus dem Temperaturwert und dem Druckwert stellt die Steuerung 21 den Istwert der Unterkühlung des Kältemittels fest und vergleicht diesen mit einem vorgegebenen Sollwert der Unterkühlung von beispielsweise 15 °K. Je nachdem, ob der Istwert der Unterkühlung über oder unter dem Sollwert liegt, regelt die Steuerung 21 die Pumpleistung der Pumpe 17 runter oder hoch, sodass damit der interne Wärmetausch über den ersten internen Wärmetauscher 13 und den zweiten internen Wärmetauscher 19 herunter- oder hochgeregelt wird.

Denkbar ist auch eine Variante der Heiz- und/oder Klimaanlage 1, bei der die Pumpe 17 in der Pumpleistung nicht regelbar ist, und sie je nach Betriebszustand des Kältemittelkreises 11 aktiviert oder deaktiviert ist, wie beispielsweise im Klimabetrieb aktiviert und im Wärmepumpenbetrieb, also Heizbetrieb, deaktiviert ist. Eine Steuerung 21, ein Temperatursensor 23 und ein Drucksensor 25 wären für eine derartige Klima- und/oder Heizanlage entbehrlich.

Die Heiz- und/oder Klimaanlage 1 ist für das Heizen und/oder Kühlen von Luft eines Innenraums eines Fahrzeugs, wie beispielsweise eines Fahrgastraums eines Omnibusses, ausgebildet.

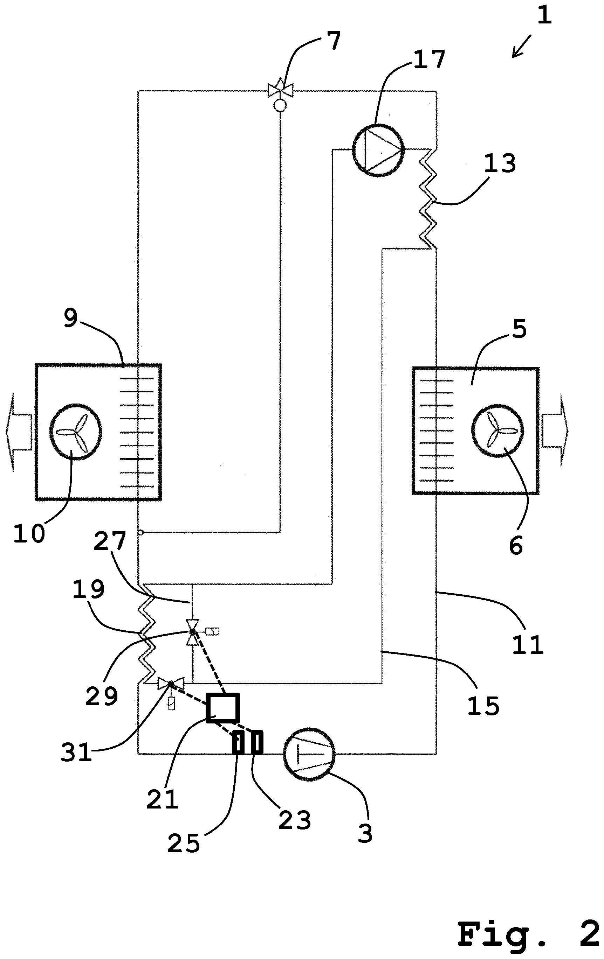

In Fig. 2 ist ein Ausführungsbeispiel einer
Heiz- und/oder Klimaanlage 1 mit einem einen Verdichter 3, einen Kondensator/Gaskühler 5, ein als thermostatisches Expansionsventil ausgebildetes Expansionsorgan 7 und einen Verdampfer 9 umfassenden Kältemittelkreis 11, schematisch dargestellt. Dem Kondensator/Gaskühler 5 ist die Luftfördereinrichtung 6 und dem Verdampfer 9 die Luftfördereinrichtung 10 zugeordnet. In diesem Fall wird der Kältemittelkreis 11 transkritisch beziehungsweise überkritisch beispielsweise mit $CO_2$ als Kältemittel betrieben, sodass der Kondensator/Gaskühler 5 als Gaskühler ausgebildet ist. Denkbar ist auch ein Kältemittelkreis 11, der unterkritische betrieben wird. Im Hochdruckbereich des Kältemittelkreises 11 ist zwischen dem Kondensator/Gaskühler 5 und dem Expansionsorgan 7 der erste interne Wärmetauscher 13 integriert. Er ist für einen Wärmetausch zwischen Kältemittel des Kältemittelkreises 11 und Wärmemedium des Sekundärkreises 15 vorgesehen. Das Wärmemedium des Sekundärkreises ist Wasser oder Wasser-Glykol-Gemisch. Antreibbar von der Pumpe 17 kann das Wärmemedium im Sekundärkreis zirkulieren. Es nimmt stromabwärts der Pumpe 17 vom Kältemittel im ersten internen Wärmetauscher 13 Wärme auf und transportiert diese in Richtung des zweiten internen Wärmetauschers 19. Dieser einerseits im Sekundärkreis 15 integrierte zweite interne Wärmetauscher 19 ist andererseits im Niedrigdruckbereich des Kältemittelkreises 11 zwischen dem Verdampfer 9 und dem Verdichter 3 integriert und für einen Wärmetausch zwischen Kältemittel des Kältemittelkreises 11 und Wärmemedium des Sekundärkreises 15 vorgesehen. Somit sind der erste interne Wärmetauscher 13 und der zweite interne Wärmetauscher 19 derart zueinander angeordnet, dass sie mithilfe des Wärmemediums des Sekundärkreises 15 thermisch gekoppelt beziehungsweise thermisch koppelbar sind. Zum zweiten internen Wärmetauscher 19 weist der Sekundärkreis 15 einen Bypass 27 auf. In diesem Bypass 27 ist das regelbare Ventil 29 angeordnet. Ferner ist ein weiteres regelbares Ventil 31 parallel dazu vor dem internen Wärmetauscher 19 im Sekundärkreis 15 angeordnet. Die beiden Ventile 29 und 31 werden über in Fig. 2 gestrichelt dargestellte Steuerverbindungen von der Steuerung 21 automatisch gesteuert. Sie werden derart gesteuert, dass der Volumenstromanteil des Wärmemediums im Sekundärkreis 15, der durch den Bypass 27 und damit nicht durch den zweiten internen Wärmetauscher 19 strömt, in der Größe einstellbar ist. Die Steuerung 21 empfängt vom Temperatursensor 23 im Niedrigdruckbereich des Kältemittelkreises 11 vor dem Verdichter 3 den Temperaturwert des Kältemittels. Außerdem empfängt die Steuerung 21 vom Drucksensor 25 im Niedrigdruckbereich des Kältemittelkreises 11 vor dem Verdichter 3 den Druckwert des Kältemittels. Aus dem Temperaturwert und dem Druckwert stellt die Steuerung 21 den Istwert der Überhitzung des Kältemittels fest und vergleicht diesen mit einem vorgegebenen Sollwert der Überhitzung von beispielsweise 10 °K. Je nachdem, ob der Istwert der Überhitzung über oder unter dem Sollwert liegt, regelt die Steuerung 21 über die beiden Ventile 29 und 31 den Anteil des Volumenstroms des Wärmemediums durch den Bypass 27 hoch oder runter, sodass damit der interne Wärmetausch über den ersten internen Wärmetauscher 13 und den zweiten internen Wärmetauscher 19 herunter- oder hochgeregelt wird. Die Pumpe 17 ist in diesem Ausführungsbeispiel in der Pumpleistung nicht regelbar. Die Heiz- und/oder Klimaanlage 1 ist für das Heizen und/oder Kühlen von Luft eines Innenraums eines Fahrzeugs ausgebildet.

Denkbar ist aber auch eine Ausführung, die die Merkmale und Komponenten der in Fig. 1 und in Fig. 2 gezeigten Ausführungsbeispiele kombiniert.

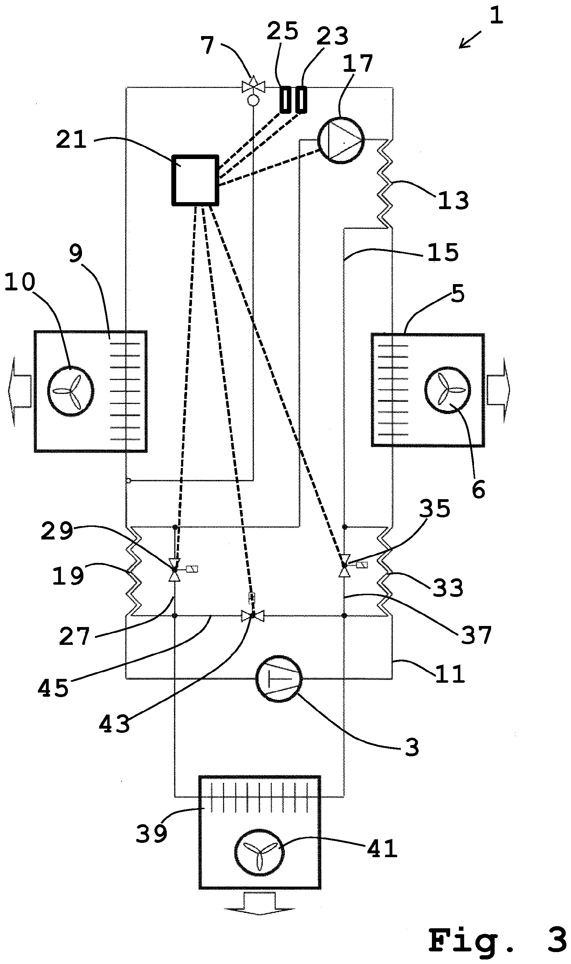

In Fig. 3 ist ein Ausführungsbeispiel einer Heiz- und/oder Klimaanlage 1 mit einem auch als Heizkreis ausgebildeten Sekundärkreis 15 schematisch dargestellt. Deren Kältemittelkreis 11 umfasst neben dem Verdichter 3, Kondensator/Gaskühler 5, ersten internen Wärmetauscher 13, dem als thermostatisches Expansionsventil ausgebildeten Expansionsorgan 7, Verdampfer 9 und zweiten internen Wärmetauscher 19 noch einen Fluid-Fluid-Wärmetauscher 33. Dem Kondensator/Gaskühler 5 ist die Luftfördereinrichtung 6 und dem Verdampfer 9 die Luftfördereinrichtung 10 zugeordnet. Der Fluid-Fluid-Wärmetauscher 33 ist mit seiner einen Seite im Hochdruckbereich zwischen Verdichter 3 und Kondensator/Gaskühler 5 im Kältemittelkreis 11 angeordnet. Dieser Fluid-Fluid-Wärmetauscher 33 ist wie der erste interne Wärmetauscher 13 und der zweite interne Wärmetauscher 19 zum Wärmetausch zwischen Kältemittel des Kältemittelkreises 11 und Wärmemedium des Sekundärkreises 15 vorgesehen. Im Sekundärkreis 15 ist zu dem Fluid-Fluid-Wärmetauscher 33 ein mit Ventil 35 regelbarer Bypass 37 angeordnet. Die Steuerung 21 steuert über in Fig. 3 gestrichelt dargestellte Steuerverbindung automatische das regelbare Ventil 35 und damit den Anteil des Volumenstroms des Wärmemediums durch den Bypass 37 am Fluid-Fluid-Wärmetauscher 33 vorbei. Im Sekundärkreis 15 stromabwärts vom Fluid-Fluid-Wärmetauscher 33 ist ein weiterer Wärmetauscher 39, der als Luft-Fluid-Wärmetauscher ausgebildet ist, angeordnet. Er dient zum Wärmetausch mit einem Medium, das in diesem Fall Luft für einen Innenraum eines Fahrzeugs ist. Das Gebläse 41 ist zur Förderung von Luft durch den weiteren Wärmetauscher 39 in den damit zu heizenden Raum oder Bereich eingerichtet. Denkbar ist auch, dass der weitere Wärmetauscher 39 zum direkten Wärmetausch mit einem zu heizenden Objekt, wie beispielsweise einer Traktionsbatterie, ausgebildet ist. Zum weiteren Wärmetauscher 39 verläuft ein mit Ventil 43 regelbarer Bypass 45 im Sekundärkreis 15. Die Steuerung 21 steuert über Steuerverbindung automatische das regelbare Ventil 43 und damit den Anteil des Volumenstroms des Wärmemediums durch den Bypass 45 am weiteren Wärmetauscher 39 vorbei. Auch zum zweiten internen Wärmetauscher 19 existiert im Sekundärkreis 15 ein mit Ventil 29 regelbarer Bypass 27. Die Steuerung 21 steuert über Steuerverbindung automatische das regelbare Ventil 29 und damit den Anteil des Volumenstroms des Wärmemediums durch den Bypass 27 am zweiten internen Wärmetauscher 19 vorbei. Das Wärmemedium ist Wasser oder Wasser-Glykol-Gemisch. Bei aktivierter Pumpe 17, die in ihrer Pumpleistung regelbar ist, zirkuliert das Wärmemedium im Sekundärkreis 15. Dabei nimmt es im einerseits zwischen Kondensator 5 und Expansionsorgan 7 im Hochdruckbereich des Kältemittelkreises 11 integrierten ersten internen Wärmetauscher 13 vom Kältemittel Wärme auf. Im Sekundärkreis 15 weiter stromabwärts nimmt das Wärmemedium in seinem Volumenstromanteil dafür über das Ventil 35 regelbar im Fluid-Fluid-Wärmetauscher 33 zusätzlich Wärme vom Kältemittel des Kältemittelkreises 11 auf. Diese im Fluid-Fluid-Wärmetauscher 33 aufgenommene Wärme dient zum Heizen. Im Sekundärkreis 15 stromabwärts des Fluid-Fluid-Wärmetausches 33 gibt ein über das Ventil 43 regelbarer Anteil des Volumenstroms des Wärmemediums zum weiteren Wärmetauscher 39 in diesem Wärme zum Heizen an das vom Gebläse 41 geförderte Medium Luft ab. Im Sekundärkreis 15 weiter stromabwärts gibt ein über das Ventil 29 regelbarer Anteil des Volumenstroms des Wärmemediums zum zweiten internen Wärmetauscher 19 in diesem Wärme an das Kältemittel im Niedrigdruckbereich des Kältemittelkreises 11 zwischen Verdampfer 9 und Verdichter 3 ab. Der erste interne Wärmetauscher 13 und der zweite interne Wärmetauscher 19 sind so zueinander angeordnet, dass sie mithilfe des Wärmemediums des Sekundärkreises 15 thermisch koppelbar sind.

Die Steuerung 21 empfängt von dem im Kältemittelkreis 11 vor dem Expansionsorgan 7 angeordneten Temperatursensor 23 und Drucksensor 25 den Temperaturwert und den Druckwert des Kältemittels dort im Hochdruckbereich. Ferner empfängt die Steuerung 21 die Information, wie viel Heizbedarf besteht. Aus diesen Informationen ermittelt die Steuerung 21 automatisch, wie die Pumpe 17 und die Ventile 35, 43 und 29 zu regeln sind und regelt diese entsprechend.

Die Heiz- und/oder Klimaanlage 1 ist für das Heizen und/oder Kühlen von Luft eines Innenraums eines Fahrzeugs, wie beispielsweise dem Fahrgastraum eines Schienenfahrzeugs, ausgebildet.

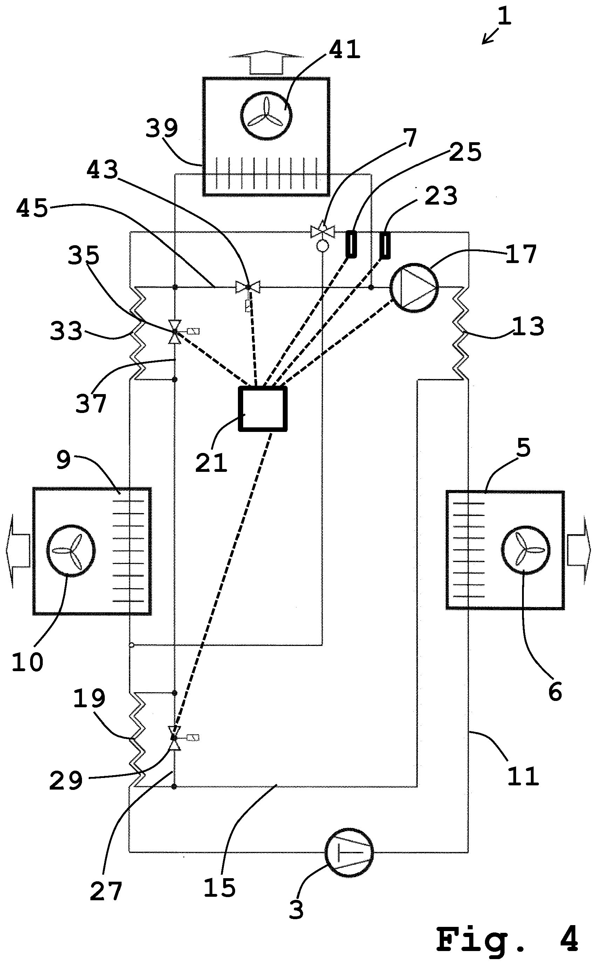

In Fig. 4 ist ein Ausführungsbeispiel einer Heiz- und/oder Klimaanlage 1 mit einem auch als Kühlkreis ausgebildeten Sekundärkreis 15 schematisch dargestellt. Sie entspricht bis auf die Anordnung des Fluid-Fluid-Wärmetauschers 33, des mit Ventil 35 regelbaren Bypasses 37, des weiteren Wärmetauschers 39 mit Gebläse 41 sowie des mit Ventil 43 regelbaren Bypasses 45 der in Fig. 3 gezeigten Heiz- und/oder Klimaanlage 1. Sie umfasst also wie zu Fig. 3 beschrieben die Luftfördereinrichtungen 6 und 10 sowie einen Kältemittelkreis 11 mit Verdichter 3, Kondensator/Gaskühler 5, ersten internen Wärmetauscher 13, Expansionsorgan 7, Verdampfer 9 und zweiten internen Wärmetauscher 19 sowie einen Sekundärkreis 15 mit in der Pumpleistung regelbarer Pumpe 17 und dem über Ventil 29 regelbaren Bypass 27 zum zweiten internen Wärmetauscher 19.

Der Fluid-Fluid-Wärmetauscher 33 ist mit seiner einen Seite im Niedrigruckbereich zwischen Expansionsorgan 7 und Verdampfer 9 im Kältemittelkreis 11 angeordnet. Der Fluid-Fluid-Wärmetauscher 33 ist zum Wärmetausch zwischen Kältemittel des Kältemittelkreises 11 und Wärmemedium des Sekundärkreises 15 vorgesehen. Im Sekundärkreis 15 ist zu dem Fluid-Fluid-Wärmetauscher 33 ein mit Ventil 35 regelbarer Bypass 37 angeordnet. Im Sekundärkreis 15 stromabwärts vom Fluid-Fluid-Wärmetauscher 33 ist ein weiterer Wärmetauscher 39, der als Luft-Fluid-Wärmetauscher ausgebildet ist, angeordnet. Er dient zum Wärmetausch mit einem Medium, das beispielsweise Luft für einen Innenraum eines Fahrzeugs ist. Das Gebläse 41 ist zur Förderung von Luft durch den weiteren Wärmetauscher 39 in den damit zu kühlenden Raum oder Bereich eingerichtet. Denkbar ist auch, dass der weitere Wärmetauscher 39 zum direkten Wärmetausch mit einem zu kühlenden Objekt, wie beispielsweise einer Traktionsbatterie, ausgebildet ist. Zum weiteren Wärmetauscher 39 verläuft ein mit Ventil 43 regelbarer Bypass 45 im Sekundärkreis 15.

Das Wärmemedium ist Wasser oder ein Wasser-Glykol-Gemisch. Bei aktivierter Pumpe 17 zirkuliert das Wärmemedium im Sekundärkreis 15. Dabei nimmt es im ersten internen Wärmetauscher 13 vom Kältemittel Wärme auf. Im Sekundärkreis 15 weiter stromabwärts gibt ein über das Ventil 29 regelbarer Anteil des Volumenstroms des Wärmemediums zum zweiten internen Wärmetauscher 19 in diesem Wärme an das Kältemittel wieder ab. Im Sekundärkreis 15 weiter stromabwärts gibt das Wärmemedium in seinem Volumenstromanteil dafür über das Ventil 35 regelbar im Fluid-Fluid-Wärmetauscher 33 zusätzlich Wärme an das Kältemittel des Kältemittelkreises 11 ab. Das so weiter abgekühlte Wärmemedium dient zum Kühlen. Im Sekundärkreis 15 stromabwärts des Fluid-Fluid-Wärmetauscheres 33 nimmt ein über das Ventil 43 regelbarer Anteil des Volumenstroms des Wärmemediums zum weiteren Wärmetauscher 39 in diesem Wärme zum Kühlen der vom Gebläse 41 geförderten Luft auf.

Die Steuerung 21 empfängt von dem im Kältemittelkreis 11 vor dem Expansionsorgan 7 angeordneten Temperatursensor 23 und Drucksensor 25 den Temperaturwert und den Druckwert des Kältemittels dort im Hochdruckbereich. Ferner empfängt die Steuerung 21 die Information, wie viel Kühlbedarf besteht. Aus diesen Informationen ermittelt die Steuerung 21 automatisch, wie die Pumpe 17 und die Ventile 35, 43 und 29 zu regeln sind und regelt diese über die in Fig. 4 gestrichelt dargestellten Steuerverbindungen entsprechend.

Denkbar ist aber auch eine Ausführung, die die Merkmale und Komponenten der in Fig. 3 und in Fig. 4 gezeigten Ausführungsbeispiele kombiniert, sodass der Sekundärkreis je nach entsprechender Schaltung der Ventile sowohl als Heizkreis als auch als Kühlkreis ausgebildet ist.

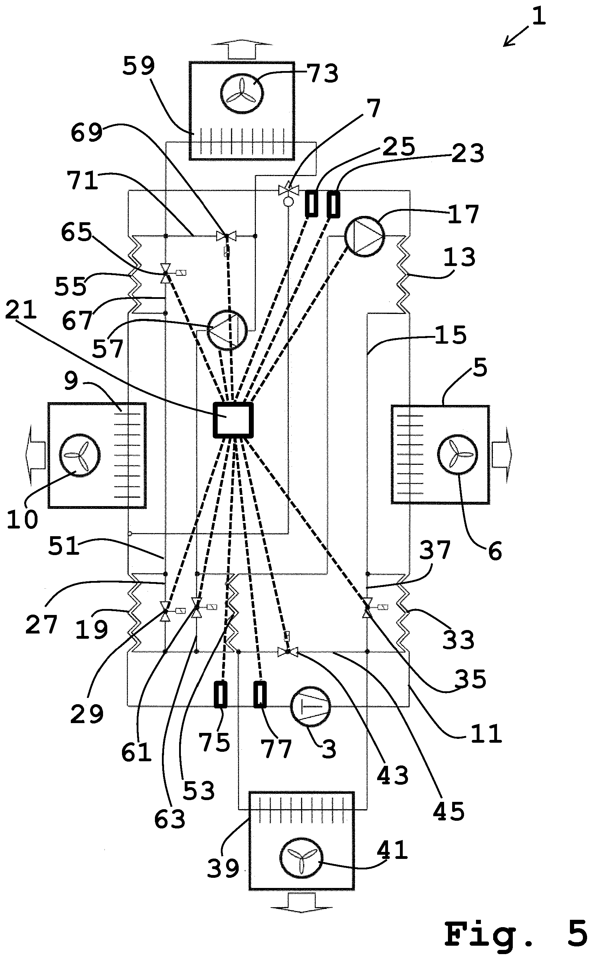

In Fig. 5 ist ein weiteres Ausführungsbeispiel einer Heiz- und/oder Klimaanlage 1 schematisch dargestellt. Sie umfasst einen Kältemittelkreis 11, einen auch als Heizkreis ausgebildeten Sekundärkreis 15 und einen auch als Kühlkreis ausgebildeten weiteren Sekundärkreis 51, wobei zum Wärmetausch zwischen dem Wärmemedium des Sekundärkreises 15 und dem weiteren Wärmemedium des weiteren Sekundärkreises 51 der dritte interne Wärmetauscher 53 vorgesehen ist. Im Kältemittelkreis 11 sind in Strömungsrichtung des Kältemittels der Verdichter 3, der Fluid-Fluid-Wärmetauscher 33, der Kondensator/Gaskühler 5, der erste interne Wärmetauscher 13, das als thermostatisches Expansionsventil ausgebildete Expansionsorgan 7, der weitere Fluid-Fluid-Wärmetauscher 55, der Verdampfer 9 und der zweite interne Wärmetauscher 19 angeordnet. Das Kältemittel ist zum Beispiel $CO_2$. Dem Kondensator/Gaskühler 5 ist die Luftfördereinrichtung 6 und dem Verdampfer 9 die Luftfördereinrichtung 10 zugeordnet. Mit der in der Pumpleistung regelbaren Pumpe 17 lässt sich im Sekundärkreis 15 das Wärmemedium, das Wasser oder Wasser-Glykol-Gemisch ist, nacheinander durch den ersten internen Wärmetauscher 13, den Fluid-Fluid-Wärmetauscher 33, den weiteren Wärmetauscher 39 und den dritten internen Wärmetauscher 53 pumpen, wobei statt durch den Fluid-Fluid-Wärmetauscher 33 ein mit Ventil 35 in der Größe regelbarer Anteil vom Volumenstrom des Wärmemediums durch den Bypass 37 strömen kann und statt durch den weiteren Wärmetauscher 39 ein mit Ventil 43 in der Größe regelbarer Anteil vom Volumenstrom des Wärmemediums durch den Bypass 45 strömen kann. Das dem weiteren Wärmetauscher 39 zugeordnete Gebläse 41 fördert als Medium Luft in den damit zu heizenden Raum. Über das Wärmemedium im Sekundärkreis 15 ist der erste interne Wärmetauscher 15 mit dem dritten internen Wärmetauscher 53 thermisch gekoppelt. Über den Wärmetausch im dritten internen Wärmetauscher 53 ist eine thermische Kopplung mit dem weiteren Wärmemedium, das Wasser oder ein Wasser-Glykol-Gemisch ist, des weiteren Sekundärkreises 51 vorgesehen. Das weitere Wärmemedium zirkuliert bei Betrieb angetrieben durch eine in ihrer Pumpleistung regelbare Pumpe 57 im weiteren Sekundärkreis 51. Es lässt sich so nacheinander durch den dritten internen Wärmetauscher 53, den zweiten internen Wärmetauscher 19, den weiteren Fluid-Fluid-Wärmetauscher 55 und den weiteren Wärmetauscher 59 pumpen, wobei zu jedem dieser Wärmetauscher im weiteren Sekundärkreis 51 jeweils ein mit Ventil 29, 61, 65, 69 regelbarer Bypass 27, 63, 67, 71 existiert und statt durch den jeweiligen Wärmetauscher 19, 53, 55, 59 ein mit dem jeweiligen Ventil 29, 61, 65, 69 in der Größe jeweils regelbarer Anteil vom Volumenstrom des weiteren Wärmemediums durch den jeweiligen Bypass 27, 63, 67, 71 strömen kann. Das dem weiteren Wärmetauscher 59 zugeordnete Gebläse 73 fördert als Medium Luft in den damit zu kühlenden Raum. Der interne Wärmetausch zwischen dem Kältemittel, das durch den im Hochdruckbereich des Kältemittelkreises 11 zwischen dem Kondensator/Gaskühler 5 und Expansionsorgan 7 angeordneten ersten internen Wärmetauscher 13 strömt, und dem Kältemittel, das durch den im Niedrigdruckbereich des Kältemittelkreises 11 zwischen Verdampfer 9 und Verdichter 3 angeordneten zweiten internen Wärmetauscher 19 strömt, erfolgt über das Wärmemedium des Sekundärkreises 15, den dritten internen Wärmetauscher 53 und weiter über das weitere Wärmemedium des weiteren Sekundärkreises 51. Damit sind der erste interne Wärmetauscher 13 und der zweite interne Wärmetauscher 19 derart angeordnet, dass sie mithilfe unter anderem des Wärmemediums des Sekundärkreises 15 thermisch gekoppelt oder thermisch koppelbar sind.

Die Steuerung 21 empfängt von den im Hochdruckbereich des Kältemittelkreises 11 vor dem Expansionsorgan 7 angeordneten Temperatursensor 23 und Drucksensor 25 sowie von den im Niedrigdruckbereich des Kältemittelkreises 11 vor dem Verdichter 3 angeordneten Temperatursensor 75 und Drucksensor 77 die Temperaturwerte und Druckwerte des Kältemittels im jeweiligen Bereich. Ferner empfängt die Steuerung 21 die Information, wie viel Kühl- oder Heizbedarf besteht. Aus diesen Informationen ermittelt die Steuerung 21 automatisch, wie die Pumpen 17 und 57 sowie die Ventile 29, 35, 43, 61, 65 und 69 zu regeln sind und regelt diese über die in Fig. 5 gestrichelt dargestellten Steuerverbindungen entsprechend.

Die Heiz- und/oder Klimaanlage 1 ist für das Heizen und/oder Kühlen von Luft eines Innenraums eines Fahrzeugs, wie beispielsweise eines Fahrgastraums eines Omnibusses, ausgebildet. Sie kann beispielsweise dabei als Aufdachanlage konzipiert sein.

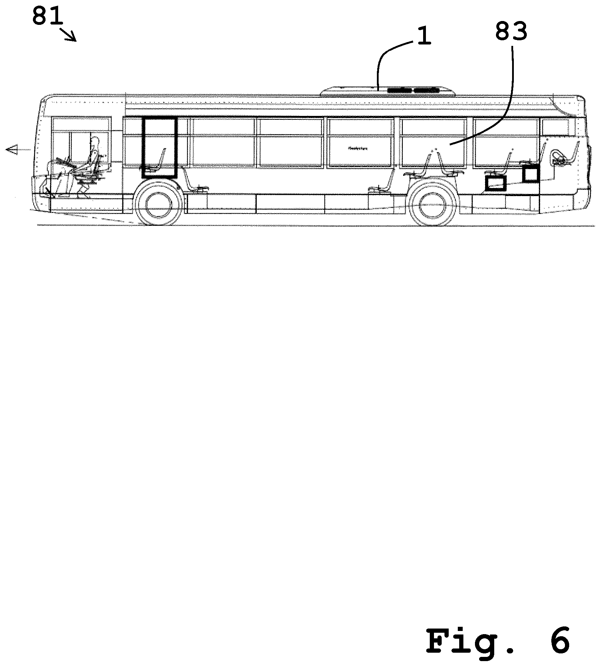

In Fig. 6 ist ein Ausführungsbeispiel eines Fahrzeugs 81 mit einer erfindungsgemäßen Heiz- und/oder Klimaanlage 1 dargestellt. Das Fahrzeug 81 ist als Omnibus ausgebildet. Die Heiz- und/oder Klimaanlage 1 ist als Aufdachanlage auf dem Fahrzeug 81 montiert. Sie ist beispielsweise eine von den in Fig. 1, 2, 3, 4 und 5 gezeigten Heiz- und/oder Klimaanlagen 1 und für das Heizen und/oder Kühlen von Luft für den Innenraum 83 des Fahrzeugs 81 wie insbesondere für den Fahrgastraum eingerichtet.

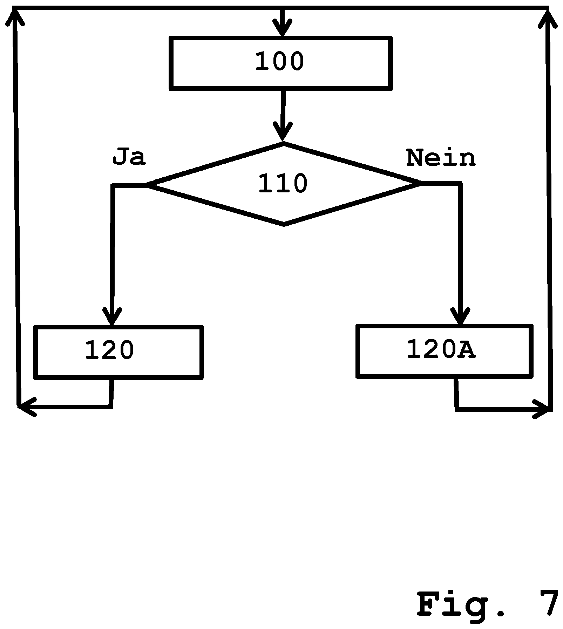

In Fig. 7 ist in Flussdiagrammdarstellung ein Ausführungsbeispiel eines erfindungsgemäßen Verfahrens gezeigt. Es ist ein Verfahren zum Steuern einer erfindungsgemäßen Heiz- und/oder Klimaanlage wie beispielsweise der in Fig. 5 gezeigten.

Im ersten Schritt 100, der auch als Schritt a) bezeichnet wird, werden Druckwerte im Kältemittelkreis mit den entsprechenden Drucksensoren sowie Temperaturwerte im Kältemittelkreis mit den entsprechenden Temperatursensoren durch Messung ermittelt. Im zweiten Schritt 110, der auch als Zwischenschritt aa) bezeichnet wird, wird anhand der im ersten Schritt 100 ermittelten Druckwerte und Temperaturwerte festgestellt, ob eine zu große Überhitzung des Kältemittels vor dem Verdichter und/oder eine zu große Unterkühlung des Kältemittels vor dem Expansionsorgan vorliegt/vorliegen. Dabei wird für den jeweiligen gemessenen Druckwert die Siedetemperatur des Kältemittels wie beispielsweise $CO_2$ ermittelt. Dieses erfolgt anhand der Funktion der Siedetemperatur abhängig vom Druck gemäß der Dampfdruckkurve im Druck-Temperatur-Verhältnis. Sofern nach der über die kritische Temperatur hinaus extrapolierten Dampfdruckkurve für den gemessenen Druckwert nur eine fiktive Siedetemperatur anzunehmen ist, wird diese ermittelt. Der im gleichen Bereich im Kältemittelkreis wie der jeweilige Druckwert gemessene Temperaturwert des Kältemittels wird mit der Siedetemperatur beziehungsweise fiktiven Siedetemperatur zum jeweiligen gemessenen Druckwert verglichen. Bei der Feststellung der Größe der Unterkühlung wird die Differenz von Siedetemperatur beziehungsweise fiktiver Siedetemperatur abzüglich gemessenem Temperaturwert gebildet. Bei der Feststellung der Größe der Überhitzung wird die Differenz von gemessenem Temperaturwert abzüglich der Siedetemperatur gebildet. Liegt nun die Unterkühlung des Kältemittels im Bereich des Kältemittelkreises vor dem Expansionsorgan über einem für eine zu große Unterkühlung vorgegeben Schwellenwert von beispielsweise 20 °K, so wird in Schritt 110 eine zu große Unterkühlung angenommen und ansonsten nicht. Das Ergebnis der Feststellung ist also zu bejahen, wenn die Unterkühlung größer als der Schwellenwert ist. Entsprechend verhält es sich bei der Feststellung, ob eine zu große Überhitzung des Kältemittels im Bereich vor dem Verdichter vorliegt. Die Feststellung ist zu bejahen, wenn die Überhitzung größer als ein vorbestimmter Schwellenwert von beispielsweise 15 °K ist.

Wenn eine der beiden Feststellungen im Schritt 110 zu bejahen ist, ist das Gesamtergebnis in Schritt 110 "Ja". Dann wird in Schritt 120 die Pumpe des Sekundärkreises deaktiviert beziehungsweise bleibt deaktiviert oder es wird zumindest ein Ventil eines Bypasses nach Anspruch 2 im Sekundärkreis oder, sofern die Heiz- und/oder Klimaanlage den weiteren Sekundärkreis umfasst, zumindest ein Ventil eines Bypasses nach Anspruch 2 oder 4 im weiteren Sekundärkreis bezüglich des Bypasses geöffnet beziehungsweise bleibt geöffnet. Damit ist der interne Wärmetausch über den ersten und zweiten internen Wärmetauscher unterbrochen.

Wenn keine Feststellung in Schritt 110 zu bejahen ist, ist das Gesamtergebnis in Schritt 110 "Nein". Dann wird in Schritt 120A die Pumpe des Sekundärkreises aktiviert beziehungsweise bleibt aktiviert und es wird falls vorhanden jedes Ventil eines Bypasses nach Anspruch 2 im Sekundärkreis und, sofern die Heiz- und/oder Klimaanlage den weiteren Sekundärkreis umfasst, falls vorhanden jedes Ventil eines Bypasses nach Anspruch 2 und 4 bezüglich des Bypasses geschlossen beziehungsweise bleibt geschlossen.

Damit ist der interne Wärmetausch über den ersten und zweiten internen Wärmetauscher eingeschaltet.

Das Verfahren beginnt nach den Schritten 120 oder 120A nach einer vorgegeben Zeitspanne von beispielsweise 0,1 Sekunden erneut.

Denkbar ist auch eine Erweiterung des Verfahrens dahingehend, dass im Schritt 100 zusätzlich mit einem Temperatursensor im Hochdruckbereich des Kältemittelkreises nach dem Verdichter der Temperaturwert des Kältemittels nach dem Verdichter ermittelt wird. Im nächsten Schritt 110 wird dann auch dieser gemessene Temperaturwert mit einem vorgegebenen Schwellenwert von beispielsweise 150 °C bei zum Beispiel dem Kältemittel $CO_2$ verglichen. Sofern der Schwellenwert überschritten ist, wird die Feststellung, ob eine zu hohe Temperatur des Kältemittels nach dem Verdichter vorliegt, bejaht "Ja" und mit dem Schritt 120 fortgefahren. Ansonsten, sofern keine Feststellung im Schritt 110 bejaht wird, also "Nein", wird mit Schritt 120A fortgefahren.

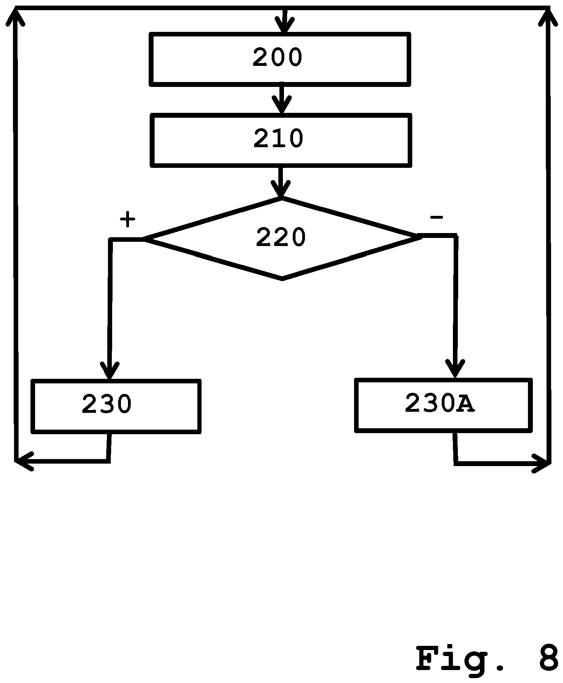

In Fig. 8 ist in Flussdiagrammdarstellung ein weiteres Ausführungsbeispiel eines erfindungsgemäßen Verfahrens zum Steuern einer erfindungsgemäßen Heiz- und/oder Klimaanlage wie beispielsweise der in Fig. 3 gezeigten dargestellt. Im ersten Schritt 200 werden ein Druckwert im Kältemittelkreis mit einem Drucksensor im Hochdruckbereich zwischen Verdichter und Expansionsorgan und ein Temperaturwert des Kältemittels mit einem Temperatursensor im Hochdruckbereich des Kältemittelkreises vor dem Expansionsorgan ermittelt. Im zweiten Schritt 210 wird anhand des im ersten Schritt 200 ermittelten Druckwerts und Temperaturwerts ein Istwert bezüglich einer Unterkühlung des Kältemittels im Hochdruckbereich des Kältemittelkreises vor dem Expansionsorgan festgestellt. Dieser festgestellte Istwert ist die Unterkühlung in °K. Im nächsten Schritt 220 wird anhand der Feststellung ermittelt, ob der Istwert größer oder geringer als ein Sollwert der Unterkühlung von beispielsweise 15 °K ist, und je nach Ergebnis entschieden, welcher Schritt folgt.

Sofern der Istwert niedriger "-" als der Sollwert ist, folgt der Schritt 230, in dem, je höher diese Differenz ist, die Pumpleistung der Pumpe des Sekundärkreises desto mehr erhöht wird und falls vorhanden jedes Ventil eines Bypasses nach Anspruch 2 im Sekundärkreis und, sofern die Heiz- und/oder Klimaanlage den weiteren Sekundärkreis umfasst, falls vorhanden jedes Ventil eines Bypasses nach Anspruch 2 und 4 bezüglich des Bypasses desto weiter verengt wird beziehungsweise geschlossen bleibt. Damit wird der interne Wärmetausch über den ersten und zweiten internen Wärmetauscher je nach Größe der festgestellten Differenz entsprechend mehr oder weniger vergrößert beziehungsweise beleibt auf Maximalstellung.

Im Falle, dass der Istwert der Unterkühlung höher ist als der Sollwert "+" ist, folgt auf Schritt 220 der Schritt 230A, in dem, je höher die Differenz ist, die Pumpleistung der Pumpe des Sekundärkreises desto mehr verringert wird und falls vorhanden zumindest ein Ventil eines Bypasses nach Anspruch 2 im Sekundärkreis und/oder, sofern die Heiz- und/oder Klimaanlage den weiteren Sekundärkreis umfasst, falls vorhanden zumindest ein Ventil eines Bypasses nach Anspruch 2 oder 4 bezüglich des Bypasses desto weiter geöffnet wird beziehungsweise vollständig geöffnet bleibt. Damit wird der interne Wärmetausch über den ersten und zweiten internen Wärmetauscher je nach Größe der festgestellten Differenz entsprechend mehr oder weniger verkleinert beziehungsweise beleibt ausgestellt.

Das Verfahren beginnt nach den Schritten 230 oder 230A nach einer vorgegeben Zeitspanne von beispielsweise 0,1 Sekunden erneut. Mit dem Verfahren wird einer Abweichung der Unterkühlung von einem vorgegeben Sollwert, bei dem die Heiz- und/oder Klimaanlage besonders effizient läuft, entgegengewirkt.

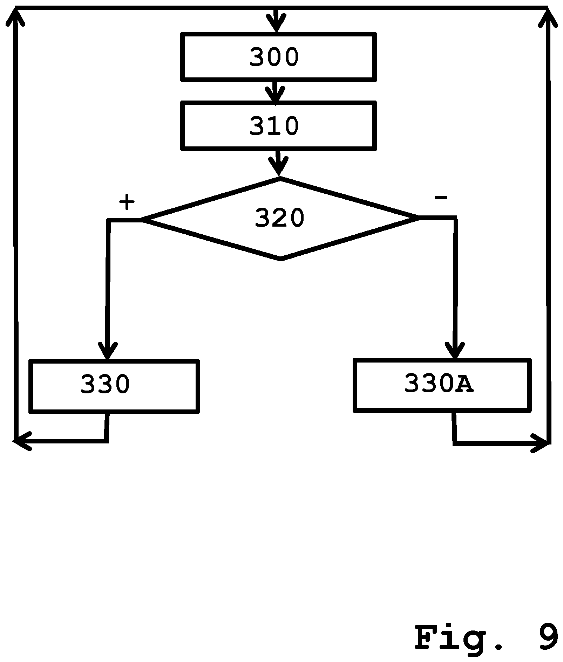

In Fig. 9 ist in Flussdiagrammdarstellung ein weiteres Ausführungsbeispiel eines erfindungsgemäßen Verfahrens zum Steuern einer erfindungsgemäßen Heiz- und/oder Klimaanlage wie beispielsweise der in Fig. 5 gezeigten dargestellt. Im ersten Schritt 300 werden ein Druckwert im Kältemittelkreis mit einem Drucksensor im Niedrigdruckbereich zwischen Expansionsorgan und Verdichter und ein Temperaturwert des Kältemittels mit einem Temperatursensor im Niedrigdruckbereich des Kältemittelkreises vor dem Verdichter ermittelt. Im zweiten Schritt 310 wird anhand des im ersten Schritt 300 ermittelten Druckwerts und Temperaturwerts ein Istwert bezüglich einer Überhitzung des Kältemittels im Niedrigdruckbereich des Kältemittelkreises vor dem Verdichter festgestellt. Dieser festgestellte Istwert ist die tatsächliche Überhitzung in °K. Im nächsten Schritt 320 wird anhand der Feststellung ermittelt, ob der Istwert größer oder geringer als ein Sollwert der Überhitzung von beispielsweise 8 °K ist, und je nach Ergebnis entschieden, welcher Schritt folgt.

Sofern der Istwert niedriger "-" ist, folgt der Schritt 330, in dem, je höher diese Differenz ist, die Pumpleistung der Pumpe des Sekundärkreises desto mehr erhöht wird und falls vorhanden jedes Ventil eines Bypasses nach Anspruch 2 im Sekundärkreis und, sofern die Heiz- und/oder Klimaanlage den weiteren Sekundärkreis umfasst, falls vorhanden jedes Ventil eines Bypasses nach Anspruch 2 und 4 bezüglich des Bypasses desto weiter verengt wird beziehungsweise geschlossen bleibt.

Im Falle, dass der Istwert der Überhitzung höher ist als der Sollwert "+", folgt auf Schritt 320 der Schritt 330A, in dem, je höher die Differenz ist, die Pumpleistung der Pumpe des Sekundärkreises desto mehr verringert wird und falls vorhanden zumindest ein Ventil eines Bypasses nach Anspruch 2 im Sekundärkreis und/oder, sofern die Heiz- und/oder Klimaanlage den weiteren Sekundärkreis umfasst, falls vorhanden zumindest ein Ventil eines Bypasses nach Anspruch 2 oder 4 bezüglich des Bypasses desto weiter geöffnet wird beziehungsweise vollständig geöffnet bleibt.

Das Verfahren beginnt nach den Schritten 330 oder 330A nach einer vorgegeben Zeitspanne von beispielsweise 0,1 Sekunden erneut. Mit dem Verfahren wird einer Abweichung der Überhitzung von einem vorgegeben Sollwert, bei dem die Heiz- und/oder Klimaanlage besonders effizient läuft, entgegengewirkt.

Denkbar sind auch Kombinationen der in Fig. 7, 8 und 9 dargestellten Verfahren.

**Patentansprüche**

1. Heiz- und/oder Klimaanlage (1) mit einem zumindest einen Verdichter (3), einen Kondensator/Gaskühler (5), ein Expansionsorgan (7) und einen Verdampfer (9) umfassenden Kältemittelkreis (11) sowie mit wenigstens einem zumindest eine Pumpe (17) für ein Wärmemedium umfassenden Sekundärkreis (15) ohne Expansionsorgan wobei

   - im Hochdruckbereich des Kältemittelkreises (11) zwischen dem Kondensator/Gaskühler (5) und dem Expansionsorgan (7) ein erster interner Wärmetauscher (13) integriert ist, der für einen Wärmetausch zwischen Kältemittel des Kältemittelkreises (11) und einem zum Wärmetransport vorgesehenen Wärmemedium des Sekundärkreises (15), das Wasser oder Wasser-Glykol-Gemisch ist, vorgesehen ist,
   - im Niedrigdruckbereich des Kältemittelkreises (11) zwischen dem Verdampfer (9) und dem Verdichter (3) ein zweiter interner Wärmetauscher (19) integriert ist, der für einen Wärmetausch zwischen dem Kältemittel des Kältemittelkreises (11) und dem Wärmemedium des Sekundärkreises (15) oder einem gegebenenfalls weiteren Wärmemedium eines gegebenenfalls weiteren Sekundärkreises (51) vorgesehen ist,
   - der erste interne Wärmetauscher (13) und der zweite interne Wärmetauscher (19) derart angeordnet sind, dass sie mithilfe zumindest des Wärmemediums des Sekundärkreises (15) thermisch gekoppelt oder thermisch koppelbar sind, und
   - die Pumpe (17) des Sekundärkreises (15) in ihrer Pumpleistung regelbar ist.

2. Heiz- und/oder Klimaanlage (1) nach Anspruch 1 **dadurch gekennzeichnet, dass** der Sekundärkreis (15) zum ersten internen Wärmetauscher (13) einen mit Ventil regelbaren Bypass und/oder zum zweiten internen Wärmetauscher (19) der Sekundärkreis (15) oder, sofern die Heiz- und/oder Klimaanlage (1) den weiteren Sekundärkreis (51) umfasst, dieser weitere Sekundärkreis (51) einen mit Ventil (29) regelbaren Bypass (27) aufweist/aufweisen.

3. Heiz- und/oder Klimaanlage (1) nach Anspruch 1 oder 2 **dadurch gekennzeichnet, dass**, sofern sie den weiteren Sekundärkreis (51) umfasst, dieser eine Pumpe (57) und einen zum Wärmetausch zwischen seinem weiteren Wärmemedium und dem Wärmemedium des Sekundärkreises (15) vorgesehenen dritten internen Wärmetauscher (53) umfasst.

4. Heiz- und/oder Klimaanlage (1) nach Anspruch 3 **dadurch gekennzeichnet, dass** der Sekundärkreis (15) und/oder der weitere Sekundärkreis (51) einen mit Ventil (61) regelbaren Bypass (63) zum dritten internen Wärmetauscher (53) aufweist/aufweisen.

5. Heiz- und/oder Klimaanlage (1) nach einem der Ansprüche 1 bis 4 **dadurch gekennzeichnet, dass** sie eine Steuerung (21) ausgebildet zum automatischen Steuern der Aktivierung sowie Deaktivierung der Pumpe (17) des Sekundärkreises (15) und/oder deren Pumpleistung und/oder des/der zum Regeln der Strömung durch den Bypass (27, 37, 63) oder die Bypässe (27, 37, 63) vorgesehenen Ventil(s)/e (29, 35, 61) umfasst.

6. Heiz- und/oder Klimaanlage (1) nach Anspruch 5 **dadurch gekennzeichnet, dass** ein Temperatursensor (23, 75) im Niedrigdruckbereich des Kältemittelkreises (11) vor dem Verdichter (3) und/oder ein Temperatursensor (23) im Hochdruckbereich des Kältemittelkreises (11) nach dem Verdichter (3) und/oder vor dem Expansionsorgan (7) angeordnet ist/sind und die Steuerung (21) derart ausgebildet ist, dass in Abhängigkeit vom/von mit dem/den Temperatursensor/en (23, 75) gemessenen Temperaturwert/en die Aktivierung sowie Deaktivierung der Pumpe (17) des Sekundärkreises (15) und/oder deren Pumpleistung und/oder das/die zum Regeln der Strömung durch den Bypass (27, 37, 63) oder die Bypässe (27, 37, 63) vorgesehene/n Ventil/e (29, 35, 61) automatisch steuerbar ist/sind.

7. Heiz- und/oder Klimaanlage (1) nach Anspruch 5 oder 6 **dadurch gekennzeichnet, dass** ein Drucksensor (25, 77) im Niedrigdruckbereich des Kältemittelkreises (11) zwischen Expansionsorgan (7) und Verdichter (3) und/oder ein Drucksensor (25) im Hochdruckbereich des Kältemittelkreises (11) zwischen Verdichter (3) und Expansionsorgan (7) angeordnet ist/sind und die Steuerung (21) derart ausgebildet ist, dass in Abhängigkeit vom/von mit dem/den Drucksensor/en (25, 77) gemessenen Druckwert/en die Aktivierung sowie Deaktivierung der Pumpe (17) des Sekundärkreises (15) und/oder deren Pumpleistung und/oder das/die zum Regeln der Strömung durch den Bypass (27, 37, 63) oder die Bypässe (27, 37, 63) vorgesehene/n Ventil/e (29, 35, 61) automatisch steuerbar ist/sind.

**8.** Heiz- und/oder Klimaanlage (1) nach einem der Ansprüche 1 bis 7 **dadurch gekennzeichnet, dass** der Sekundärkreis (15) als Heizkreis und/oder Kühlkreis mit zumindest einem weiteren Wärmetauscher (39) für einen Wärmetausch mit einem zu kühlenden und/oder zu heizenden Medium oder Objekt ausgebildet ist.

**9.** Heiz- und/oder Klimaanlage (1) nach einem der Ansprüche 1 bis 8 **dadurch gekennzeichnet, dass**, sofern sie den weiteren Sekundärkreis (51) umfasst, dieser als Kühlkreis mit zumindest einem weiteren Wärmetauscher (59) für einen Wärmetausch mit einem zu kühlenden Medium oder Objekt ausgebildet ist.

**10.** Heiz- und/oder Klimaanlage (1) nach Anspruch 8 oder 9 **dadurch gekennzeichnet, dass** der Sekundärkreis (15) jeweils zu seinem zumindest einen weiteren Wärmetauscher (39) einen mit Ventil (43) regelbaren Bypass (45) umfasst und/oder, sofern die Heiz- und/oder Klimaanlage (1) den weiteren Sekundärkreis (51) umfasst, dieser weitere Sekundärkreis (51) jeweils zu seinem zumindest einen weiteren Wärmetauscher (59) einen mit Ventil (69) regelbaren Bypass (71) umfasst.

**11.** Heiz- und/oder Klimaanlage (1) nach einem der Ansprüche 1 bis 10 **dadurch gekennzeichnet, dass** sie für das Heizen und/oder Kühlen von Luft eines Innenraums (83) eines Fahrzeugs (81), wie insbesondere eines Fahrgastraums eines Omnibusses oder Schienenfahrzeugs, ausgebildet ist.

**12.** Fahrzeug (81), wie insbesondere ein Omnibus oder Schienenfahrzeug, mit einer Heiz- und/oder Klimaanlage (1) nach einem der Ansprüche 1 bis 11.

**13.** Verfahren zum Steuern einer Heiz- und/oder Klimaanlage (1) nach einem der Ansprüche 1 bis 11, **gekennzeichnet durch** die Schritte,

a) des Ermittelns (100, 200, 300) wenigstens eines Druckwertes im Kältemittelkreis (11) und/oder wenigstens eines Temperaturwertes im Kältemittelkreis (11) und/oder des Betriebszustandes des Kältemittelkreises (11),
b) des abhängig vom wenigstens einen ermittelten Druckwert und/oder vom wenigstens einen ermittelten Temperaturwert und/oder vom ermittelten Betriebszustand Regelns (120, 120A, 230, 230A, 330, 330A) der Aktivierung sowie Deaktivierung der Pumpe (17) des Sekundärkreises (15) und/oder deren Pumpleistung und/oder des/der Ventil(s)/e (29, 35, 43, 61, 65, 69) des/der Bypasses/Bypässe (27, 37, 45, 63, 67, 71) im Sekundärkreis (15) und/oder, sofern die Heiz- und/oder Klimaanlage (1) den weiteren Sekundärkreis (51) umfasst, im weiteren Sekundärkreis (51).

**14.** Verfahren nach Anspruch 13 **dadurch gekennzeichnet**,
aa) dass anhand des/der in Schritt a) ermittelten Druckwert/e und/oder Temperaturwert/e festgestellt wird (110), ob eine zu große Überhitzung des Kältemittels vor dem Verdichter (3) und/oder eine zu große Unterkühlung des Kältemittels vor dem Expansionsorgan (7) und/oder eine zu hohe Temperatur des Kältemittels nach dem Verdichter (3) vorliegt/vorliegen, und

- dass entweder, falls zumindest eine Feststellung im Zwischenschritt aa) zu bejahen ist, im Schritt b) (120) die Pumpe (17) des Sekundärkreises (15) deaktiviert wird beziehungsweise bleibt oder deren Pumpleistung reduziert wird und/oder zumindest ein Ventil (29) eines Bypasses (27) nach Anspruch 2 im Sekundärkreis (15) oder, sofern die Heiz- und/oder Klimaanlage (1) den weiteren Sekundärkreis (51) umfasst, zumindest ein Ventil (29, 61) eines Bypasses (27, 63) nach Anspruch 2 oder 4 im weiteren Sekundärkreis (51) bezüglich des Bypasses (27, 63) geöffnet wird beziehungsweise bleibt oder weiter geöffnet wird, oder
- dass, falls keine Feststellung im Zwischenschritt aa) zu bejahen ist, im Schritt b) (120A) die Pumpe (17) des Sekundärkreises (15) aktiviert wird beziehungsweise bleibt oder auch deren Pumpleistung erhöht wird und falls vorhanden jedes Ventil (29) eines Bypasses (27) nach Anspruch 2 im Sekundärkreis (15) und, sofern die Heiz- und/oder Klimaanlage (1) den weiteren Sekundärkreis (51) umfasst, falls vorhanden jedes Ventil (29, 61) eines Bypasses (27, 63) nach Anspruch 2 und 4 bezüglich des Bypasses (27, 63) geschlossen wird beziehungsweise bleibt.

**15.** Verfahren nach Anspruch 13 oder 14 **dadurch gekennzeichnet,**

- **dass** zumindest im Schritt a) (200) ein Druckwert im Kältemittelkreis (11) mit einem Drucksensor (25) im Hochdruckbereich zwischen Verdichter (3) und Expansionsorgan (7) und ein Temperaturwert mit einem Temperatursensor (23) im Hochdruckbereich des Kältemittelkreises (11) vor dem Expansionsorgan (7) ermittelt werden,
- **dass** anhand des/der in Schritt a) ermittelten Druckwert(s)/e und Temperaturwert(s)/e ein Istwert bezüglich einer Unterkühlung des Kältemittels im Hochdruckbereich des Kältemittelkreises (11) vor dem Expansionsorgan (7) festgestellt wird (210), und
- **dass** bei niedrigerem Istwert bezüglich einer Unterkühlung des Kältemittels als ein Sollwert der Unterkühlung, je höher diese Differenz ist, im Schritt b) (230) die Pumpleistung der Pumpe (17) des Sekundärkreises (15) desto mehr erhöht wird und falls vorhanden jedes Ventil (29) eines Bypasses (27) nach Anspruch 2 im Sekundärkreis (15) und, sofern die Heiz- und/oder Klimaanlage (1) den weiteren Sekundärkreis (51) umfasst, falls vorhanden jedes Ventil (29, 61) eines Bypasses (27, 63) nach Anspruch 2 und 4 bezüglich des Bypasses (27, 63) desto weiter verengt wird beziehungsweise geschlossen bleibt, oder
- **dass** bei höherem Istwert der Unterkühlung des Kältemittels als ein Sollwert der Unterkühlung, je höher diese Differenz ist, im Schritt b) (230A) die Pumpleistung der Pumpe (17) des Sekundärkreises (15) desto mehr verringert wird und falls vorhanden zumindest ein Ventil (29) eines Bypasses (27) nach Anspruch 2 im Sekundärkreis (15) und/oder, sofern die Heiz- und/oder Klimaanlage (1) den weiteren Sekundärkreis (51) umfasst, falls vorhanden zumindest ein Ventil (29, 61) eines Bypasses (27, 63) nach Anspruch 2 oder 4 bezüglich des Bypasses (27, 63) desto weiter geöffnet wird beziehungsweise vollständig geöffnet bleibt.

16. Verfahren nach einem der Ansprüche 13 bis 15
    **dadurch gekennzeichnet,**

    - **dass** zumindest im Schritt a) (300) ein Druckwert im Kältemittelkreis (11) mit einem Drucksensor (25, 77) im Niedrigdruckbereich zwischen Expansionsorgan (7) und Verdichter (3) und ein Temperaturwert mit einem Temperatursensor (25, 75) im Niedrigdruckbereich des Kältemittelkreises (11) vor dem Verdichter (3) ermittelt werden,
    - **dass** anhand des/der in Schritt a) ermittelten Druckwert(s)/e und Temperaturwert(s)/e ein Istwert bezüglich einer Überhitzung des Kältemittels im Niedrigdruckbereich des Kältemittelkreises (11) vor dem Verdichter festgestellt wird (310), und
    - **dass** bei niedrigerem Istwert bezüglich einer Überhitzung des Kältemittels als ein Sollwert der Überhitzung, je höher diese Differenz ist, im Schritt b) (330) die Pumpleistung der Pumpe (17) des Sekundärkreises (15) desto mehr erhöht wird und falls vorhanden jedes Ventil (29) eines Bypasses (27) nach Anspruch 2 im Sekundärkreis (15) und, sofern die Heiz- und/oder Klimaanlage (1) den weiteren Sekundärkreis (51) umfasst, falls vorhanden jedes Ventil (29, 61) eines Bypasses (27, 63) nach Anspruch 2 und 4 bezüglich des Bypasses (27, 63) desto weiter verengt wird beziehungsweise geschlossen bleibt, oder
    - **dass** bei höherem Istwert der Überhitzung des Kältemittels als ein Sollwert der Überhitzung, je höher diese Differenz ist, im Schritt b) die Pumpleistung der Pumpe (17) des Sekundärkreises (15) desto mehr verringert wird und falls vorhanden zumindest ein Ventil (29) eines Bypasses (27) nach Anspruch 2 im Sekundärkreis (15) und/oder, sofern die Heiz- und/oder Klimaanlage (1) den weiteren Sekundärkreis (51) umfasst, falls vorhanden zumindest ein Ventil (29, 61) eines Bypasses (27, 63) nach Anspruch 2 oder 4 bezüglich des Bypasses (27, 63) desto weiter geöffnet wird beziehungsweise vollständig geöffnet bleibt.

## Claims

1. Heating and/or air-conditioning system (1) with a refrigerant circuit (11) comprising at least one compressor (3), a condenser/gas cooler (5), an expansion member (7) and an evaporator (9), as well as with at least one secondary circuit (15) comprising at least one pump (17) for a heat transfer medium without expansion member, wherein

   - a first internal heat exchanger (13) is integrated in the high-pressure region of the refrigerant circuit (11) between the condenser/gas cooler (5) and the expansion member (7), which heat exchanger is provided for heat exchange between the refrigerant of the refrigerant circuit (11) and a heat transfer medium provided for heat transfer from the secondary circuit (15), which is water or a water-glycol mixture,
   - a second internal heat exchanger (19) is integrated in the low-pressure region of the refrigerant circuit (11) between the evaporator (9) and the compressor (3), which heat exchanger is provided for heat exchange between the refrigerant of the refrigerant circuit (11) and the heat transfer medium of the secondary circuit (15) or a possibly additional heat transfer medium of a possibly additional secondary circuit (51),
   - the first internal heat exchanger (13) and the second internal heat exchanger (19) are arranged in such a way that they are thermally coupled or can be thermally coupled by means of at least the heat transfer medium of the secondary circuit (15), and
- the pumping power of the pump (17) of the secondary circuit (15) can be regulated.

2. Heating and/or air-conditioning system (1) according to claim 1, **characterized in that** the secondary circuit (15) includes a bypass to the first internal heat exchanger (13), which bypass can be regulated by a valve and/or the secondary circuit (15), or, if the heating and/or air-conditioning system (1) includes the additional secondary circuit (51), this additional secondary circuit (51) comprises a bypass (27) to the second internal heat exchanger (19), which bypass can be regulated by valve (29).

3. Heating and/or air-conditioning system (1) according to claim 1 or 2, **characterized in that**, insofar as it includes the additional secondary circuit (51), the latter includes a pump (57) and an internal third heat exchanger (53) provided for heat exchange between its additional heat transfer medium and the heat transfer medium of the secondary circuit (15).

4. Heating and/or air-conditioning system (1) according to claim 3, **characterized in that** the secondary circuit (15) and/or the additional secondary circuit (51) has/have a bypass (63), which can be regulated by a valve (61), to the internal third heat exchanger (53).

5. Heating and/or air-conditioning system (1) according to any one of claims 1 to 4, **characterized in that** it includes a controller (21) configured to automatically control the activation as well as the deactivation of the pump (17) of the secondary circuit (15) and/or its pumping power and/or the valve(s) (29, 35, 61) provided to regulate the flow through the bypass (27, 37, 63) or bypasses (27, 37, 63).

6. Heating and/or air-conditioning system (1) according to claim 5, **characterized in that** a temperature sensor (23, 75) is arranged in the low-pressure region of the refrigerant circuit (11) upstream of the compressor (3) and/or a temperature sensor (23) is arranged in the high-pressure region of the refrigerant circuit (11) downstream of the compressor (3) and/or upstream of the expansion member (7), and the controller (21) is configured in such a way that, depending on the temperature value(s) measured by the temperature sensor(s) (23, 75), the pump (17) of the secondary circuit (15) and/or its pumping power and/or the valve(s) (29, 35, 61) provided for regulating the flow through the bypass (27, 37, 63) or bypasses (27, 37, 63) can be controlled automatically.

7. Heating and/or air-conditioning system (1) according to claim 5 or 6, **characterized in that** a pressure sensor (25, 77) is arranged in the low-pressure region of the refrigerant circuit (11) between the expansion member (7) and the compressor (3) and/or a pressure sensor (25) is arranged in the high-pressure region of the refrigerant circuit (11) between the compressor (3) and the expansion member (7), and the controller (21) is configured in such a way that, depending on the pressure value(s) measured by the pressure sensor(s) (25, 77), the activation and deactivation of the pump (17) of the secondary circuit (15) and/or its pumping power and/or the valve(s) (29, 35, 61) provided for regulating the flow through the bypass (27, 37, 63) or bypasses (27, 37, 63) can be controlled automatically.

8. Heating and/or air-conditioning system (1) according to any one of claims 1 to 7, **characterized in that** the secondary circuit (15) is configured as a heating and/or cooling circuit with at least one additional heat exchanger (39) for heat exchange with a medium or object to be cooled and/or heated.

9. Heating and/or air-conditioning system (1) according to any one of claims 1 to 8, **characterized in that**, insofar as it includes the additional secondary circuit (51), the latter is configured as a cooling circuit with at least one additional heat exchanger (59) for heat exchange with a medium or object to be cooled.

10. Heating and/or air-conditioning system (1) according to claim 8 or 9, **characterized in that** the secondary circuit (15), in each case with respect to its at least one additional heat exchanger (39), includes a bypass (45) which can be regulated by the valve (43) and/or, insofar as the heating and/or air-conditioning system (1) includes the additional secondary circuit (51), said additional secondary circuit (51), in each case with respect to its at least one additional heat exchanger (59), includes a bypass (71) which can be regulated by the valve (69).

11. Heating and/or air-conditioning system (1) according to any one of claims 1 to 10, **characterized in that** it is configured for heating and/or cooling of air of an interior space (83) of a vehicle (81), such as in particular a passenger compartment of a bus or a railway vehicle.

12. Vehicle (81), such as in particular a bus or railway vehicle, with a heating and/or air-conditioning system (1) according to any one of claims 1 to 11.

13. Method for controlling a heating and/or air-conditioning system (1) according to any one of claims 1 to 11, **characterized by** the following steps:

a) determining (100, 200, 300) at least one pressure value in the refrigerant circuit (11) and/or at least one temperature value in the refrigerant circuit (11) and/or the operating state of the refrigerant circuit (11),
b) regulating (120, 120A, 230, 230A, 330, 330A) of the activation and deactivation of the pump (17) of the secondary circuit (15) and/or of its pumping power and/or of the valve(s) (29, 35, 43, 61, 65, 69) of the bypass/bypasses (27, 37, 45, 63, 67, 71) in the secondary circuit (15) and/or in the additional secondary circuit (51), insofar as the heating and/or air-conditioning system (1) includes the additional secondary circuit (51), as a function of at least one determined pressure value and/or at least one determined temperature value and/or the determined operating state.

14. Method according to claim 13, **characterized in that** aa) the pressure value(s) and/or temperature value(s) determined in step a) are used to identify whether there is too much overheating of the refrigerant upstream of the compressor (3) and/or too much undercooling of the refrigerant upstream of the expansion member (7) and/or too high a refrigerant temperature downstream of the compressor, and

- that either, in the event of at least one positive response to an identification in intermediate step aa), the pump (17) of the secondary circuit (15) is deactivated or remains deactivated in step b) (120) or its pumping power is reduced and/or at least one valve (29) of a bypass (27) according to claim 2 comprises in the secondary circuit (15) or, insofar as the heating and/or air-conditioning system (1) includes the additional secondary circuit (51), at least one valve (29, 61) of a bypass (27, 63) according to claim 2 or 4 in the additional secondary circuit (51) with respect to the bypass (27, 63) is open or remains open or is opened further, or
- that, if there is no positive response to an identification in intermediate step aa), in step b) (120A) the pump (17) of the secondary circuit (15) is activated or remains activated or its pumping power is increased, if present, each valve (29) of a bypass (27) according to claim 2 in the secondary circuit (15) and, insofar as the heating and/or air-conditioning system (1) includes the additional secondary circuit (51), if present, each valve (29, 61) of a bypass (27, 63) according to claims 2 and 4 is closed or remains closed in relation to the bypass (27, 63).

15. Method according to claim 13 or 14, **characterized in that**

- at least in step a) (200), a pressure value is determined in the refrigerant circuit (11) by means of a pressure sensor (25) in the high-pressure region between the compressor (3) and the expansion member (7), and a temperature value is determined in the high-pressure region of the refrigerant circuit (11) upstream of the expansion member (7) by means of a temperature sensor (23),
- the pressure value(s) and temperature value(s) determined in step a) are used to identify an actual value for supercooling of the refrigerant upstream the expansion member (7) in the high-pressure region of the refrigerant circuit (11), and
- that in the event of a lower actual value for supercooling of the refrigerant as a target value for supercooling, the greater this difference, the greater the pumping power of the pump (17) of the secondary circuit (15) is increased in step b) and, if present, each valve (29) of a bypass (27) according to claim 2 in the secondary circuit (15), and insofar as the heating and/or air-conditioning system (1) comprises the additional secondary circuit (51), and if present, the more each valve (29, 61) of a bypass (27, 63) according to claim 2 and 4 in respect of the bypass (27, 63) is constricted or closed, or
- that in the event of a higher actual value of refrigerant supercooling as a target value of supercooling, the greater this difference, the more in step (b) (230A) the pumping power of the pump (17) of the secondary circuit (15) is reduced and if available at least one valve (29) of a bypass (27) according to claim 2 in the secondary circuit (15) and/or if the heating and/or air-conditioning system (1) includes the additional secondary circuit (51), if available at least one valve (29, 61) of a bypass (27, 63) according to claim 2 or 4 in respect of the bypass (27, 63) is opened further or remains fully open.

16. Method according to any one of claims 13 to 15, **characterized in that**

- at least in step a) (300), a pressure value in the refrigerant circuit (11) is determined by means of a pressure sensor (25, 77) in the low-pressure region between the expansion member (7) and the compressor (3), and a temperature value is determined by means of a pressure sensor (25, 75) in the low-pressure region of the refrigerant circuit (11) upstream the compressor (3),

- using the pressure value(s) and temperature value(s) determined in step a), an actual value for overheating of the refrigerant in the low-pressure region of the refrigerant circuit (11) is identified (310) upstream of the compressor, and

- in the event of a lower actual value with respect to overheating of the refrigerant as a target value for overheating, the greater this difference, the more in step b) (330) the pumping power of the pump (17) of the secondary circuit (15) is increased and, if present, each valve (29) of a bypass (27) according to claim 2 in the secondary circuit (15), and, insofar as the heating and/or air-conditioning system (1) includes the additional secondary circuit (51), if present plus each valve (29, 61) of a bypass (27, 63) according to claims 2 and 4 concerning the bypass (27, 63) is reduced or remains closed, or

- that in the event of a higher actual value with respect to overheating of the refrigerant as a target value for overheating, the greater this difference, the more in step b), the pumping power of the pump (17) of the secondary circuit (15) is reduced, and, if present, the more at least one valve (29) of a bypass (27) according to claim 2 in the secondary circuit (15) and/or, insofar as the heating and/or air-conditioning system (1) includes the additional secondary circuit (51), if present, at least one valve (29, 61) of a bypass (27, 63) according to claim 2 or 4 with respect to the bypass (27, 63) is opened or remains fully open.


**Revendications**

1. Installation de chauffage et/ou de climatisation (1) avec un circuit frigorifique (11) comprenant au moins compresseur (3), un condensateur/refroidisseur de gaz (5), un organe d'expansion (7) et un évaporateur (9) ainsi qu'avec au moins un circuit secondaire (15) comprenant au moins une pompe (17) pour un milieu caloporteur sans organe d'expansion,
dans laquelle

- est intégré, dans la zone haute pression du circuit frigorifique (11) entre le condensateur/refroidisseur de gaz (5) et l'organe d'expansion (7), un premier échangeur de chaleur interne (13), qui est prévu pour un échange de chaleur entre le liquide frigorigène du circuit frigorifique (11) et un milieu caloporteur prévu pour le transport de chaleur du circuit secondaire (15), qui est de l'eau ou un mélange d'eaude glycol
- est intégré, dans la zone basse pression du circuit frigorifique (11), entre l'évaporateur (9) et le compresseur (3), un deuxième échangeur de chaleur interne (19), qui est prévu pour un échange de chaleur entre le liquide frigorigène du circuit frigorifique (15) et le milieu caloporteur du circuit secondaire (51) ou un milieu caloporteur éventuellement supplément d'un circuit secondaire éventuellement supplémentaire (51),
- le premier échangeur de chaleur (13) interne et le deuxième échangeur de chaleur (19) interne sont disposés de telle manière qu'ils sont couplés thermiquement ou qu'ils peuvent être couplés thermiquement à l'aide d'au moins le milieu caloporteur du circuit secondaire (15), et
- la pompe (17) du circuit secondaire (15) peut être régulée dans sa puissance de pompage.

2. Installation de chauffage et/ou de climatisation (1) selon la revendication 1, **caractérisée en ce que** le circuit secondaire (15) comprend, par rapport au premier échangeur de chaleur (13) interne, une dérivation pouvant être régulée avec la soupape et/ou le circuit secondaire (15) ou, dans la mesure où l'installation de chauffage et/ou de climatisation (1) comprend le circuit secondaire supplémentaire (51), ce circuit secondaire supplémentaire (51) présente/présentent, par rapport au deuxième échangeur de chaleur (19) interne, une dérivation (27) pouvant être régulée avec la soupape (29).

3. Installation de chauffage et/ou de climatisation (1) selon la revendication 1 ou 2, **caractérisée en ce que**, dans la mesure où elle comprend le circuit secondaire supplémentaire (51), ce dernier comprend une pompe (57) et un troisième échangeur de chaleur (53) interne prévu pour l'échange de chaleur entre son milieu caloporteur supplémentaire et le milieu caloporteur du circuit secondaire (15).

4. Installation de chauffage et/ou de climatisation (1) selon la revendication 3, **caractérisée en ce que** le circuit secondaire (15) et/ou le circuit secondaire supplémentaire (51) présente/présentent une dérivation (63) pouvant être régulée avec la soupape (61) par rapport au troisième échangeur de chaleur (53) interne.

5. Installation de chauffage et/ou de climatisation (1) selon l'une quelconque des revendications 1 à 4, **caractérisée en ce qu'**il comprend une commande (21) réalisée pour commander de manière automatique l'activation ainsi que la désactivation de la pompe (17) du circuit secondaire (15) et/ou sa puissance de pompage et/ou la/les soupape/soupapes (29, 35, 61) prévue/prévues pour réguler l'écoulement à travers la dérivation (27, 37, 63) ou les dérivations (27, 37, 63).

6. Installation de chauffage et/ou de climatisation (1) selon la revendication 5, **caractérisée en ce qu'**un capteur de température (23, 75) est disposé dans la zone basse pression du circuit frigorifique (11) devant le compresseur (3) et/ou un capteur de température (23) est disposé dans la zone haute pression du circuit frigorifique (11) après le compresseur (3) et/ou devant l'organe d'expansion (7), et la commande (21) est réalisée de telle manière qu'en fonction de la valeur/des valeurs mesurée/mesurées avec le/les capteur(s) de température (23, 75), l'activation ainsi que la désactivation de la pompe (17) du circuit secondaire (15) et/ou sa puissance de pompage et/ou la/les soupapes/soupapes (29, 35, 61) prévue/prévues pour réguler l'écoulement à travers la dérivation (27, 37, 63) ou les dérivations (27, 37, 63) peuvent être automatiquement commandées.

7. Installation de chauffage et/ou de climatisation (1) selon la revendication 5 ou 6, **caractérisée en ce qu'**un capteur de pression (25, 77) est disposé dans la zone basse pression du circuit frigorifique (11) entre l'organe d'expansion (7) et le compresseur (3) et/ou un capteur de pression (25) est disposé dans la zone haute pression du circuit frigorifique (11) entre le compresseur (3) et l'organe d'expansion (7), et la commande (21) est réalisée de telle manière qu'en fonction de la valeur/des valeurs de pression mesurée/mesurées avec le/les capteur(s) de pression (25, 77), l'activation ainsi que la désactivation de la pompe (17) du circuit secondaire (15) et/ou sa puissance de pompage et/ou la/les soupapes (29, 35, 61) prévue/prévues pour réguler l'écoulement à travers la dérivation (27, 37, 63) ou les dérivations (27, 37, 63) peuvent être commandées de manière automatique.

8. Installation de chauffage et/ou de climatisation (1) selon l'une quelconque des revendications 1 à 7, **caractérisée en ce que** le circuit secondaire (15) est réalisé en tant que circuit de chauffage et/ou circuit de refroidissement avec au moins un échangeur de chaleur supplémentaire (39) pour un échange de chaleur avec un milieu ou un objet à refroidir et/ou à chauffer.

9. Installation de chauffage et/ou de climatisation (1) selon l'une quelconque des revendications 1 à 8, **caractérisée en ce que**, dans la mesure où elle comprend le circuit secondaire supplémentaire (51), celui-ci est réalisé en tant que circuit de refroidissement avec au moins un échangeur de chaleur supplémentaire (59) pour un échange de chaleur avec un milieu ou un objet à refroidir.

10. Installation de chauffage et/ou de climatisation (1) selon la revendication 8 ou 9, **caractérisée en ce que** le circuit secondaire (15) comprend respectivement par rapport à son au moins un échangeur de chaleur supplémentaire (39) une dérivation (45) pouvant être régulée avec la soupape (43) et/ou, dans la mesure où l'installation de chauffage et/ou de climatisation (1) comprend le circuit secondaire supplémentaire (51), ledit circuit secondaire supplémentaire (51) comprend respectivement, par rapport à son au moins un échangeur de chaleur supplémentaire (59), une dérivation (71) pouvant être régulée avec la soupape (69).

11. Installation de chauffage et/ou de climatisation (1) selon l'une quelconque des revendications 1 à 10, **caractérisée en ce qu'**elle est réalisée pour le chauffage et/ou le refroidissement de l'air d'un espace intérieur (83) d'un véhicule (81), comme en particulier d'un habitacle d'un autobus ou d'un véhicule sur rails.

12. Véhicule (81), comme en particulier autobus ou véhicule sur rails, avec une installation de chauffage et/ou de climatisation (1) selon l'une quelconque des revendications 1 à 11.

13. Procédé pour commander une installation de chauffage et/ou de climatisation (1) selon l'une quelconque des revendications 1 à 11, **caractérisé par** les étapes

    a) de la détermination (100, 200, 300) d'au moins une valeur de pression dans le circuit frigorifique (11) et/ou d'au moins une valeur de température dans le circuit frigorifique (11) et/ou de l'état de fonctionnement du circuit frigorifique (11),
    b) de la régulation (120, 120A, 230, 230A, 330, 330A) de l'activation ainsi que de la désactivation de la pompe (17) du circuit secondaire (15) et/ou de sa puissance de pompage et/ou de la/des soupape(s) (29, 35, 43, 61, 65, 69) de la dérivation/des dérivations (27, 37, 45, 63, 67, 71) dans le circuit secondaire (15) et/ou, dans la mesure où l'installation de chauffage et/ou de climatisation (1) comprend le circuit secondaire supplémentaire (51) dans le circuit secondaire supplémentaire (51) en fonction d'au moins une valeur de pression déterminée et/ou d'au moins une valeur de température déterminée et/ou de l'état de fonctionnement déterminé.

**14.** Procédé selon la revendication 13, caractérisé

aa) en ce qu'il est constaté à l'aide de la/des valeur(s) de pression et/ou de la/des valeur(s) de température déterminées lors de l'étape a) si une surchauffe trop importante du circuit frigorifique est présente devant le compresseur (3) et/ou un sous-refroidissement trop important du circuit frigorifique est présent devant l'organe d'expansion (7) et/ou une température trop importante du liquide frigorigène est présent après le compresseur, et

- que soit, en cas de réponse affirmative à une constatation dans l'étape intermédiaire aa), la pompe (17) du circuit secondaire (15) est désactivée ou reste désactivée dans l'étape b) (120) ou sa puissance de pompage est réduite et/ou au moins une soupape (29) d'une dérivation (27) selon la revendication 2 comprend dans le circuit secondaire (15) ou, dans la mesure où l'installation de chauffage et/ou de climatisation (1) comprend le circuit secondaire supplémentaire (51), au moins une soupape (29, 61) d'une dérivation (27, 63) selon la revendication 2 ou 4 dans le circuit secondaire supplémentaire (51) concernant la dérivation (27, 63) est ouverte ou reste ouverte ou est davantage ouverte,
- que, si aucune constatation n'appelle une réponse positive dans l'étape intermédiaire aa), dans l'étape b) (120A), la pompe (17) du circuit secondaire (15) est activée ou reste activée ou encore sa puissance de pompage est augmentée, si disponible, chaque soupape (29) d'une dérivation (27) selon la revendication 2 dans le circuit secondaire (15) et, dans la mesure où l'installation de chauffage et/ou de climatisation (1) comprend le circuit secondaire supplémentaire (51), si disponible, chaque soupape (29, 61) d'un dérivation (27, 63) selon la revendication 2 et 4 est fermée ou reste fermée par rapport à la dérivation (27, 63).

**15.** Procédé selon la revendication 13 ou 14, **caractérisé en ce**

- **qu'**au moins dans l'étape a) (200), une valeur de pression est déterminée dans le circuit frigorifique (11) avec un capteur de pression (25) dans la zone haute pression entre le compresseur (3) et l'organe d'expansion (7) et une valeur de température est déterminée avec un capteur de température (23) dans la zone haute pression du circuit frigorifique (11) devant l'organe d'expansion (7),
- **qu'**à l'aide de la/des valeur(s) de pression et valeur(s) de température déterminée(s) dans l'étape a), une valeur réelle en ce qui concerne un sous-refroidissement du liquide frigorigène est constatée devant l'organe d'expansion (7) dans la zone haute pression du circuit frigorifique (11), et
- **qu'**en cas de valeur réelle plus basse en ce qui concerne un sous-refroidissement du liquide frigorigène en tant qu'une valeur théorique du sous-refroidissement, plus cette différence est importante, plus la puissance de pompage de la pompe (17) du circuit secondaire (15) est augmentée dans l'étape b) et, si disponible, chaque soupape (29) d'une dérivation (27) selon la revendication 2 dans le circuit secondaire (15), et dans la mesure où l'installation de chauffage et/ou de climatisation (1) comprend le circuit secondaire supplémentaire (51), et si disponible, plus chaque soupape (29, 61) d'une dérivation (27, 63) selon la revendication 2 et 4 concernant la dérivation (27, 63) est réduite ou est fermée, ou
- **qu'**en cas de valeur réelle plus élevée du sous-refroidissement du liquide frigorigène en tant qu'une valeur théorique du sous-refroidissement plus cette différence est importante, plus dans l'étape (b) (230A) la puissance de pompage de la pompe (17) du circuit secondaire (15) est réduite et si disponible au moins une soupape (29) d'une dérivation (27) selon la revendication 2 dans le circuit secondaire (15) et/ou si l'installation de chauffage et/ou de climatisation (1) comprend le circuit secondaire supplémentaire (51), si disponible, au moins une soupape (29, 61) d'une dérivation (27, 63) selon la revendication 2 ou 4 concernant la dérivation (27, 63) est plus ouverte ou reste totalement ouverte.

**16.** Procédé selon l'une quelconque des revendications 13 à 15, **caractérisé en ce**

- **qu'**au moins dans l'étape a) (300), une valeur de pression dans le circuit frigorifique (11) est déterminée avec un capteur de pression (25, 77) dans la zone basse pression entre l'organe d'expansion (7) et le compresseur (3) et une valeur de température est déterminée avec un capteur de pression (25, 75) dans la zone de basse pression du circuit frigorifique (11) devant le compresseur (3),
- **qu'**à l'aide de la/des valeur(s) de pression et de la/des valeur(s) de température déterminée(s) dans l'étape a), une valeur réelle concernant une surchauffe du liquide frigorigène dans la zone basse pression du circuit frigorifique (11) est constatée (310) devant le compresseur, et
- **qu'**en cas de valeur réelle plus basse en ce qui concerne une surchauffe du liquide frigorigène en tant qu'une valeur théorique de la surchauffe, plus cette différence est importante, plus dans l'étape b) (330) la puissance de pompage de la pompe (17) du circuit secondaire (15) est augmentée et si disponible chaque soupape (29) d'une dérivation (27) selon la revendication 2 dans le circuit secondaire (15), et, dans la mesure où l'installation de chauffage et/ou de climatisation (1) comprend le circuit secondaire supplémentaire (51), si disponible plus chaque soupape (29, 61) d'une dérivation (27, 63) selon la revendication 2 et 4 concernant la dérivation (27, 63) est réduite ou reste fermée, ou

- **qu'**en cas de valeur réelle plus importante de la surchauffe du liquide frigorigène en tant qu'une valeur théorique de la surchauffe, plus cette différence est élevée, plus, dans l'étape b), la puissance de pompage de la pompe (17) du circuit secondaire (15) est réduite, et, si disponible, plus au moins une soupape (29) d'une dérivation (27) selon la revendication 2 dans le circuit secondaire (15) et/ou, dans la mesure où l'installation de chauffage et/ou de climatisation (1) comprend le circuit secondaire supplémentaire (51), si disponible, plus une soupape (29, 61) d'une dérivation (27, 63) selon la revendication 2 ou 4 en ce qui concerne la dérivation (27, 63) est ouverte ou reste totalement ouverte.

Fig. 1

Fig. 2

**Fig. 3**

**Fig. 4**

Fig. 5

81

1    83

Fig. 6

```
        ┌──────────────┐
        │     100      │
        └──────────────┘
               │
               ▼
  Ja        ◇ 110 ◇        Nein
   │                         │
   ▼                         ▼
┌──────┐               ┌──────────┐
│ 120  │               │  120A    │
└──────┘               └──────────┘
```

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018100814 A1
- EP 1623857 A1
- DE 102005005430 A1
- DE 102016103085 A1
- DE 10247667 A1
- FR 3030700 A
- KR 20150023090 A
- WO 2018042091 A1
- US 2017227260 A1
- JP 2011117685 A
- EP 2174810 A2